(19) Europäisches Patentamt
European Patent Office
Office européen des brevets

(11) EP 2 896 600 A1

(12) # EUROPEAN PATENT APPLICATION
published in accordance with Art. 153(4) EPC

(43) Date of publication:
**22.07.2015 Bulletin 2015/30**

(21) Application number: **13837219.8**

(22) Date of filing: **05.09.2013**

(51) Int Cl.:
***C02F 1/48*** *(2006.01)*

(86) International application number:
**PCT/JP2013/073983**

(87) International publication number:
**WO 2014/042077 (20.03.2014 Gazette 2014/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.09.2012 JP 2012201430**

(71) Applicant: **Kuraray Co., Ltd.**
**Okayama 710-0801 (JP)**

(72) Inventor: **JIKIHARA, Atsushi**
**Kurashiki-shi**
**Okayama 713-8550 (JP)**

(74) Representative: **Müller-Boré & Partner**
**Patentanwälte PartG mbB**
**Friedenheimer Brücke 21**
**80639 München (DE)**

(54) **ELECTRODE, METHOD FOR PRODUCING SAME, AND FLOW-THROUGH CAPACITOR INCLUDING SAME**

(57) The present invention provides an electrode comprising a current collector layer, a porous electrode layer and an ion exchange layer which are arranged in this order, wherein the ion exchange layer contains a vinyl alcohol copolymer (P) copolymerized with 0.1 to 50 mol% of a monomer having an ionic group and the porous electrode layer contains a carbon material. This electrode has a low electrode resistance, and, therefore, is useful as an electrode for a flow-through capacitor.

[Fig. 1]

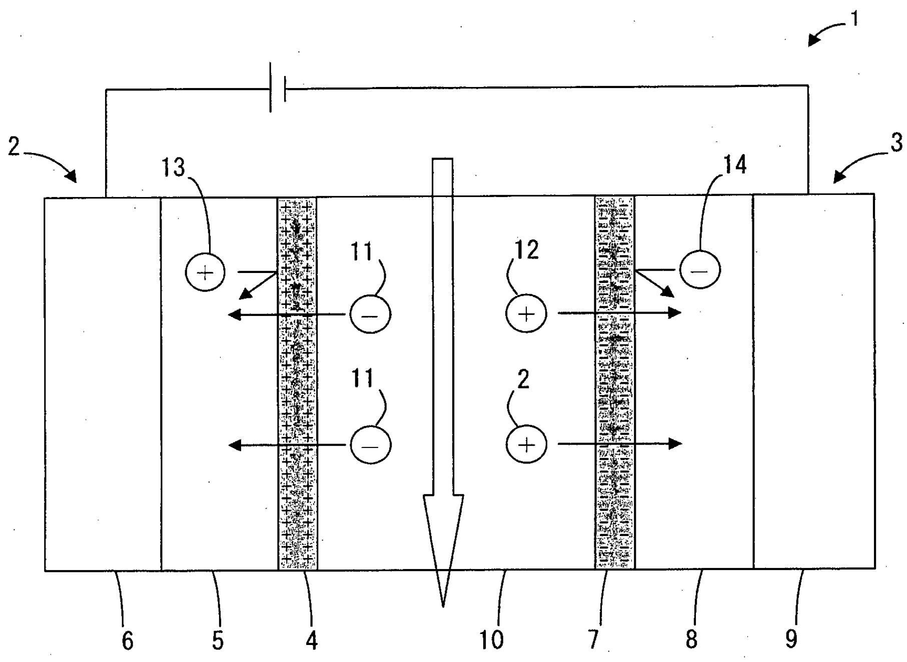


EP 2 896 600 A1

## Description

TECHNICAL FIELD

The present invention relates to an electrode having a current collector layer, a porous electrode layer and an ion exchange layer, and a producing method therefor. The invention also relates to a flow-through capacitor having such anelectrode. The invention further relates to a desalination apparatus having such a flow-through capacitor and a desalination method using the apparatus.

BACKGROUND ART

A flow-through capacitor (flow-through electric double layer capacitor) is used for removing a substance in a gas or a liquid (aqueous or non-aqueous) or changing a composition. Generally, a flow-through capacitor has electrodes having an electrode layer with a high surface area and a flow path between the electrodes. For removing a substance or changing a composition, electrostatic adsorption, electrochemical reaction, catalytic decomposition or the like using the electrode is employed.

There have been reported several flow-through capacitors used for desalination of water containing ionic substances employing electrostatic adsorption of ions by means of an electrode.

In general, desalination using a flow-through capacitor is conducted by repeating a desalination step (ion adsorption step) where a direct-current voltage is applied between the electrodes in the flow-through capacitor to adsorb ions in water fed between the electrodes onto each electrode, and then water after removal of the ionic substances is collected, and an electrode cleaning step (ion desorption step) where a direct-current power supply is reversely connected or the electrodes are short-circuited to desorb ions adsorbed onto each electrode for regenerating the electrodes.

Patent Reference Nos. 1 and 2 have described a flow-through capacitor used in a column for constant charge chromatography for the purpose of purification of a liquid. The flow-through capacitor has an adjacent-layer group containing a first conductive supporting layer, a first high-surface-area conductive layer, a first non-conductive porous spacer layer, a second conductive supporting layer, a second high-surface-area conductive layer and a second non-conductive porous spacer layer. The flow-through capacitor is comprised of a plurality of the adjacent-layer groups which are spirally wound. It is described that the flow-through capacitor can be used for, for example, purification of water containing ionic substances such as sodiumchloride. In addition to the winding type flow-through capacitor as described above, Patent Reference No. 2 has described a flow-through capacitor comprised of laminated washer type electrodes which are a lamination of a conductive supporting washer, a high-surface-area conductive washer and a non-conductive spacer washer.

However, a flow-through capacitor described in Patent Reference Nos. 1 and 2 has problems that in the desalination step, sub-ions adsorbed to an electrode (ions having charge with the same sign as that of electrode charge) inhibit adsorption of counter ions to be primarily adsorbed (ions having charge with the opposite sign to that of electrode charge) and that sub-ions are desorbed and discharged out of the electrode to contaminate water to be desalinated, leading to reduction in a current efficiency. Furthermore, there is a problem that in the electrode cleaning step, reversing connection of a direct-current power supply causes re-adsorption of the ions desorbed from the electrode to the electrode having charge with the opposite sign to that of charge of the ions, leading to contamination of the electrode.

To solve the problems, there have been reported several flow-through capacitors employing electrodes in which an ion-exchange membrane is disposed on the surface of an electrode layer. When desalination is conducted using such a flow-through capacitor, a charge with the same sign as that of a fixed charge of the ion-exchange membrane is applied to the electrode in a desalination step and a charge with the opposite sign to that of a fixed charge of the ion-exchange membrane is applied to the electrode in the electrode cleaning step. In the desalination step, discharge of sub-ions desorbed from the electrode out of the electrode is blocked by the ion-exchange membrane, resulting in increase in a current efficiency. Furthermore, in the electrode cleaning step, re-adsorption of the ions desorbed by the electrode as described above is prevented by the ion-exchange membrane.

Patent Reference No. 3 has described flow-through capacitor employing an electrode comprised of adjacent ion-exchange membranes as a porous electrode. Furthermore, many polymers having ionic groups which are used as the above ion-exchange membrane are exemplified. Patent Reference No. 4 has described an assembly having an electrode containing a porous material with a configuration that ions having a charge with the opposite sign to that of a charge of the electrode are adsorbed, and an ion-exchange material in contact with the electrode. Furthermore, a desalination apparatus employing the electrode assembly is described. Patent Reference No. 4 has described ionic conductive polymers and the like as an ion-exchange material. However, the flow-through capacitor described in Patent Reference Nos. 3 and 4 is still insufficient in a current efficiency.

Non-patent Reference No. 1 has described a flow-through capacitor having electrodes in which a cation-exchange resin is applied to the surface of a carbon electrode. The cation-exchange resin on the electrode surface is

formed by applying polyvinyl alcohol to the electrode surface, then treating the polyvinyl alcohol with sulfosuccinic acid to initiate crosslinking and introduce a sulfonic acid group. Here, the polyvinyl alcohol is intermolecularly crosslinked via an ester bond. An ester bond is, however, less resistant to an alkaline agent. Therefore, when the electrode surface is stained, cleaning is difficult. Furthermore, sulfonic acid groups cannot be sufficiently introduced. Moreover, the flow-through capacitor has an inadequate current efficiency.

PRIOR ART REFERENCES

Patent References

Patent Reference No. 1: US Patent No. 5192432
Patent Reference No. 2: JP 5-258992 A
Patent Reference No. 3: US Patent No. 6709560
Patent Reference No. 4: JP 2010-513018 A
Patent Reference No. 5: JP 59-187003 A
Patent Reference No. 6: JP 59-189113 A

Non-patent References

Non-patent Reference No. 1: J. Membr. Sci., Vol. 355, p.85 (2010)

PROBLEM TO BE SOLVED BY THE INVENTION

To solve the above problems, an objective of the present invention is to provide an electrode with a lower electrode resistance which can be suitably used as an electrode for a flow-through capacitor, and a producing method therefor. Another objective of the present invention is to provide a flow-through capacitor having an excellent current efficiency in removal of ionic substances (desalination), separation of ionic and nonionic substances or the like. A further obj ective of the present invention is to provide a desalination apparatus using such a flow-through capacitor and a desalination method using the desalination apparatus.

MEANS FOR SOLVING PROBLEM

The above problems can be solved by providing an electrode comprising a current collector layer, a porous electrode layer and an ion exchange layer which are arranged in this order, wherein the ion exchange layer contains a vinyl alcohol copolymer (P) copolymerized with 0.1 to 50 mol% of a monomer having an ionic group, and the porous electrode layer contains a carbon material.

Here, it is suitable that the vinyl alcohol copolymer (P) is a block copolymer (P') containing a vinyl alcohol polymer block (A) and an ionic-group-containing polymer block (B) as components. It is also suitable that a thickness of the ion exchange layer is 1 to 100 μm and a thickness of the porous electrode layer is 50 to 1000 μm.

The above problems can be also resolved by providing a method for producing an electrode, comprising applying a slurry containing the carbon material and a solution containing the vinyl alcohol copolymer (P) to the surface of the current collector layer, and then drying the coated film to form the porous electrode layer and the ion exchange layer.

Here it is suitable that the slurry containing the carbon material and the solution containing the vinyl alcohol copolymer (P) are concurrently applied to the surface of the current collector layer. It is also suitable that the slurry containing the carbon material is applied to the surface of the current collector layer and then the solution of the vinyl alcohol copolymer (P) is applied to the surface of the slurry. It is also suitable that the coated film is dried and then further heated and/or crosslinked.

A suitable embodiment of the present invention is an electrode for a flow-through capacitor consisting of the above electrode. Here, a more suitable embodiment is a flow-through capacitor, wherein a flow path is formed between the above electrodes; the ion exchange layer in one electrode is an anion-exchange layer containing a vinyl alcohol copolymer (P1) copolymerized with 0.1 to 50 mol% of a monomer having a cationic group; the ion exchange layer in the other electrode is a cation-exchange layer containing a vinyl alcohol copolymer (P2) copolymerized with 0.1 to 50 mol% of a monomer having an anionic group; and the anion-exchange layer and the cation-exchange layer faces each other via the flow path.

Another suitable embodiment of the present invention is a desalination apparatus , comprising the above flow-through capacitor, a container containing the capacitor and a direct-current power supply, wherein the direct-current

power supply is connected to each electrode such that a cathode and an anode are exchangeable; and wherein the container has an inlet for a liquid containing an ionic substance to be desalinized with flow-through capacitor and an outlet for a desalinized liquid.

Another suitable embodiment of the present invention is a process for desalinizing a liquid containing an ionic substance using the above desalination apparatus, comprising a first step comprising feeding a liquid containing an ionic substance to the flow path between the electrodes, applying a voltage to each of the electrode having the anion-exchange layer as a cathode and the electrode having the cation-exchange layer as an anode by the direct-current power supply to adsorb ions in the liquid onto the porous electrode layer, and then discharging the liquid for collection; and a second step comprising feeding a liquid to the flowpath, applying a voltage to each of the electrode having the anion-exchange layer as an anode and the electrode having the cation-exchange layer as a cathode by the direct-current power supply to desorb ions adsorbed onto the porous electrode layer in the first step, and then discharging the liquid containing desorbed ions.

## EFFECTS OF THE INVENTION

An electrode according to the present invention has a lower electric resistance and an ion exchange layer in the electrode has excellent selective ion permeability and membrane strength. A flow-through capacitor employing the electrode can, therefore, efficiently and stably conduct desalination and separation of ionic and nonionic substances for a long period. Furthermore, a producing method of the present invention can provide an electrode having an ion exchange layer with less defects due to foaming.

## BRIEF DESCRIPTION OF THE DRAWINGS

FIG. 1 schematically shows, as an example, adsorption of ions by a flow-through capacitor using electrodes of the present invention.

FIG. 2 schematically shows, as an example, desorption of ions by a flow-through capacitor using electrodes of the present invention.

FIG. 3 schematically shows an example of a desalination apparatus having a flow-through capacitor of the present invention.

FIG. 4 is an exploded perspective view of a flow-through capacitor in a desalination apparatus of the present invention.

FIG. 5 schematically shows a method for measuring an electrode resistance in Examples.

FIG. 6 is an electron microgram of the cross section of a porous electrode layer and a cationic block copolymer (P1') layer in an electrode of Example 1.

## MODES FOR CARRYING OUT THE INVENTION

An electrode of the present invention contains a current collector layer, a porous electrode layer and an ion exchange layer which are arranged in this order, wherein the ion exchange layer contains a vinyl alcohol copolymer (P) copolymerized with 0.1 to 50 mol% of a monomer having an ionic group, and the porous electrode layer contains a carbon material.

The electrode of the present invention can efficiently adsorb and desorb ions. Adsorption and desorption of ions by the electrode of the present invention occur in a porous electrode layer. Adsorption and desorption of ions are derived by utilizing electrostatic force between the porous electrode layer and the ions generated by applying a charge to the porous electrode layer by applying a voltage to the electrode.

One side of the above porous electrode layer faces a current collector layer, and the porous electrode layer is electrically connected to the current collector layer. The electrode and external power source are connected usually by electrically connecting a part of the current collector layer to the external power source. By thus connecting the electrode to the external power source, charge can be applied to the porous electrode layer.

The other side of the porous electrode layer faces the ion exchange layer. When adsorption or desorption of ions is conducted using an electrode of the present invention, ions transfer between the porous electrode layer and the outside of the electrode substantially through the ion exchange layer. The ion exchange layer has a fixed charge derived from ionic groups in the vinyl alcohol copolymer (P), and therefore, selectively permeates ions having the opposite sign to that of the charge of the ionic groups. Thus, ions transfer through such an ion exchange layer having selective ion permeability, so that reduction in an efficiency of adsorption and desorption can be inhibited when adsorption and desorption of ions are repeatedly conducted.

In the electrode of the present invention, the ion exchange layer facing the porous electrode layer is an ion

exchange layer containing a vinyl alcohol copolymer (P) copolymerized with 0.1 to 50 mol% of a monomer having an ionic group. The ion exchange layer has a lower membrane resistance, easily permeates ions and exhibits excellent selective ion permeability. Furthermore, the ion exchange layer has excellent membrane strength and excellent resistance to organic contamination. Using such an ion exchange layer, the electrode of the present invention can efficiently and stably conduct adsorption and desorption of ions for an expended period of time.

A vinyl alcohol copolymer (P) can be categorized into one of two types, depending on whether a monomer having an ionic group as a copolymerization partner is a monomer having a cationic group or a monomer having an anionic group. A vinyl alcohol copolymer (P) is a vinyl alcohol copolymer (P1) copolymerized with a monomer having a cationic group, or a vinyl alcohol copolymer (P2) copolymerized with a monomer having an anionic group. Selective ion permeability of the ion exchange layer is endowed by a fixed charge derived from the ionic groups in the vinyl alcohol copolymer (P). The ion exchange layer containing the vinyl alcohol copolymer (P1) copolymerized with a monomer having a cationic group is an anion-exchange layer which selectively permeates anions, and the ion exchange layer containing the vinyl alcohol copolymer (P2) copolymerized with a monomer having an anionic group is a cation-exchange layer which selectively permeates cations.

A repeating unit having a cationic group in the vinyl alcohol copolymer (P1) can be, but not limited to, a repeating unit represented by any of general formulas (1) to (6):

[Chemical Formula 1]

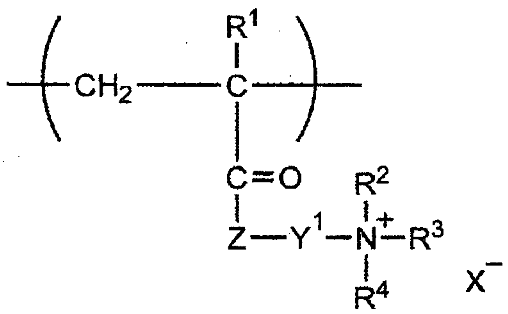

(1)

wherein $R^1$ represents a hydrogen atom or an alkyl group having 1 to 4 carbon atoms; $R^2$, $R^3$ and $R^4$ are independently of each other a hydrogen atom or an alkyl, an aryl or an aralkyl group having 1 to 18 carbon atoms which may have a substituent or $R^2$, $R^3$ and $R^4$ may be connected with each other to form a saturated or unsaturated cyclic structure; Z represents -O- or -NH-; $Y^1$ represents a divalent linking group having 1 to 8 carbon atoms optionally via a heteroatom; and $X^-$ represents an anion.

Examples of the anion $X^-$ in general formula (1) include halide, hydroxide, phosphate, carboxylate and sulfonate ions.

[Chemical Formula 2]

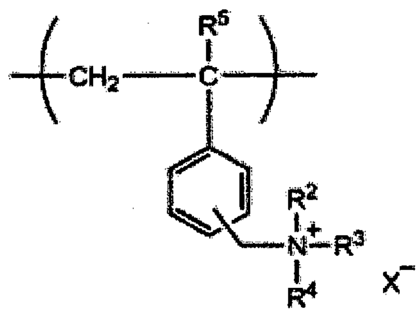

(2)

wherein $R^5$ represents a hydrogen atomor a methyl group;
and $R^2$, $R^3$, $R^4$ and $X^-$ are as defined in general formula (1).

[Chemical Formula 3]

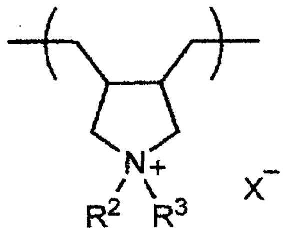

(3)

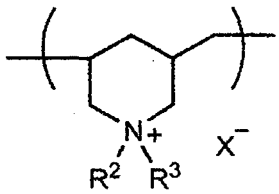

(4)

wherein $R^2$, $R^3$ and $X^-$ are as defined in general formula (1).

[Chemical Formula 4]

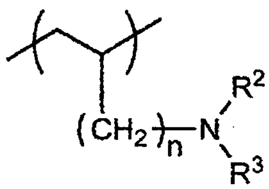

(5)

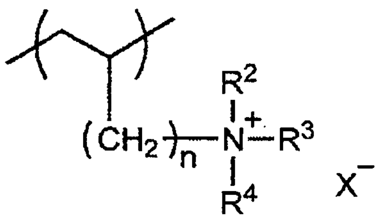

(6)

wherein n represents 0 or 1; and $R^2$, $R^3$, $R^4$ and $X^-$ are as defined in general formula (1).

Examples of a monomer having a cationic group used for synthesis of the vinyl alcohol copolymer (P1) having the repeating unit represented by general formula (I) include quaternary compounds such as N,N-dialkylaminoalkyl (meth)acrylate (for example, N,N-dimethylaminoethyl (meth)acrylate, N,N-diethylaminoethyl (meth)acrylate, N,N-dimethylaminopropyl (meth)acrylate and N,N-diethylaminopropyl (meth)acrylate), N,N-dialkylaminoalkyl (meth)acrylamide (for example, N,N-dimethylaminoethyl (meth)acrylamide, N,N-diethylaminoethyl (meth)acrylamide, N,N-dimethylaminopropyl (meth)acrylamide and N,N-diethylaminopropyl (meth)acrylamide) with an alkyl halide (for example, methyl chloride, ethyl chloride, methyl bromide, ethyl bromide, methyl iodide or ethyl iodide), and the quaternary compounds in which an anion is replaced with a sulfonate, an alkyl sulfonate, an acetate or an alkylcarboxylate.

Examples of a monomer having a cationic group used for synthesis of the vinyl alcohol copolymer (P1) having the repeating unit represented by general formula (2) include trimethyl-p-vinylbenzylammonium chloride, trimethyl-m-vinylbenzylammonium chloride, triethyl-p-vinylbenzylammonium chloride, triethyl-m-vinylbenzylammonium chloride, N,N-dimethyl-N-ethyl-N-p-vinylbenzylammonium chloride, N,N-diethyl-N-methyl-N-p-vinylbenzylammonium chloride, N,N-dimethyl-N-n-propyl-N-p-vinylbenzylammonium chloride, N,N-dimethyl-N-n-octyl-N-p-vinylbenzylammonium chloride, N,N-dimethyl-N-benzyl-N-p-vinylbenzylammonium chloride, N,N-diethyl-N-benzyl-N-p-vinylbenzylammonium chloride, N,N-dimethyl-N-(4-methyl)benzyl-N-p-vinylbenzylammonium chloride, N,N-dimethyl-N-phenyl-N-p-vinylbenzylammonium chloride, trimethyl-p-vinylbenzylammonium bromide, trimethyl-m-vinylbenzylammonium bromide, trimethyl-p-vinylbenzylammonium sulfonate, trimethyl-m-vinylbenzylammonium sulfonate, trimethyl-p-vinylbenzylammonium acetate, and trimethyl-m-vinylbenzylammonium acetate.

Furthermore, examples of a monomer having a cationic group used for synthesis of the vinyl alcohol copolymer (P1) include dimethyldiallylammonium chloride, dimethyldiallylammonium chloride, trimethyl-2-(methacryloyloxy)ethylammonium chloride, triethyl-2-(methacryloyloxy)ethylammonium chloride, trimethyl-2-(acryloyloxy)ethylammonium chloride, triethyl-2-(acryloyloxy)ethylammonium chloride, trimethyl-3-(methacryloyloxy)propylammonium chloride, triethyl-3-(methacryloyloxy)propylammonium chloride, trimethyl-2-(methacryloylamino)ethylammonium chloride, triethyl-2-(methacryloylamino)ethylammonium chloride, trimethyl-2-(acryloylamino)ethylammonium chloride, triethyl-2-(acryloylamino)ethylammonium chloride, trimethyl-3-(methacryloylamino)propylammonium chloride, triethyl-3-(methacryloylamino)propylammonium chloride, trimethyl-3-(acryloylamino)propylammonium chloride, triethyl-3-(acryloylamino)propylammonium chloride, N,N-dimethyl-N-ethyl-2-(methacryloyloxy)ethylammonium chloride, N,N-diethyl-N-methyl-2-(methacryloyloxy)ethylammonium chloride, N,N-dimethyl-N-ethyl-3-(acryloylamino)propylammonium chloride, trimethyl-2-(methacryloyloxy)ethylammonium bromide, trimethyl-3-(acryloylamino)propylammonium bromide, trimethyl-2-(methacryloyloxy)ethylammonium sulfonate, and trimethyl-3-(acryloylamino)propylammonium acetate. Further copolymerizable monomers can include N-vinylimidazole and N-vinyl-2-methylimidazole.

A repeating unit having an anionic group in the vinyl alcohol copolymer (P2) can be, but not limited to, a repeating unit represented by general formula (7) or (8):

[Chemical Formula 5]

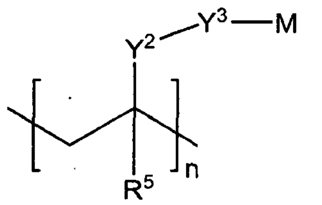

(7)

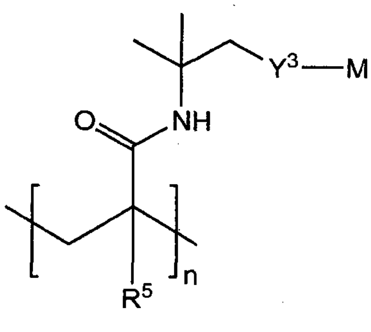

(8)

wherein $R^5$ is as defined in general formula (2); $Y^2$ represents a phenylene or naphthylene group optionally substituted with a methyl group; $Y^3$ represents a sulfonyloxy group ($-SO_3-$), a phosphonyloxy group ($-PO_3H-$) or a carbonyloxy group ($-CO_2-$); and M represents a hydrogen atom, an ammonium ion or an alkali metal ion.

$Y^3$ in general formulas (7) and (8) is preferably a sulfonyloxy group or a phosphonyloxy group which provides a higher charge density. Examples of an alkali metal ion in definition of M include sodium, potassium and lithium ions.

Among monomers having an anionic group used for synthesis of the vinyl alcohol copolymer (P2), examples of a monomer constituting the repeating unit represented by general formula (7) in a polymer formed include p-styrene

sulfonic acid or an alkali-metal or ammonium salt thereof, p-styrene phosphonic acid or an alkali-metal or ammonium salt thereof, p-styrene carboxylic acid or an alkali-metal or ammonium salt thereof, α-methyl-p-styrene sulfonic acid or an alkali-metal or ammonium salt thereof, α-methyl-p-styrene phosphonic acid or an alkali-metal or ammonium salt thereof, α-methyl-p-styrene carboxylic acid or an alkali-metal or ammonium salt thereof, 2-vinylnaphthalene sulfonic acid or an alkali-metal or ammonium salt thereof, 2-vinylnaphthalene phosphonic acid or an alkali-metal or ammonium salt thereof, and 2-naphthalene carboxylic acid or an alkali-metal or ammonium salt thereof.

Among monomers monomer having an anionic group used for synthesis of the vinyl alcohol copolymer (P2), examples of a monomer constituting the repeating unit represented by general formula (8) in a polymer formed include 2-(meth)acrylamide-2-methylpropane sulfonic acid or an alkali-metal or ammonium salt thereof, 2-(meth)acrylamide-2-methylpropane phosphonic acid or an alkali-metal or ammonium salt thereof, and 2-(meth)acrylamide-2-methylpropane carboxylic acid or an alkali-metal or ammonium salt thereof.

The vinyl alcohol copolymer (P) used in the present invention is a vinyl alcohol copolymer copolymerized with a monomer having an ionic group. Examples of the vinyl alcohol copolymer (P) include a block copolymer (P’) and a graft copolymer containing a polymer component formed by polymerizing a vinyl alcohol polymer component with a monomer having an ionic group, and a random copolymer (P") formed by copolymerizing a monomer having an ionic group with a vinyl ester monomer and then saponifying the copolymer.

The vinyl alcohol copolymer (P) used in the present invention is a vinyl alcohol copolymer copolymerized with 0. 1 to 50 mol% of a monomer having an ionic group. In other words, a proportion of the number (molar number) of units of the monomer having an ionic group (ionic monomer unit) to the total number (molar number) of monomer units in the vinyl alcohol copolymer (P) is 0.1 to 50 mol%. If a content of the ionic monomer units is less than 0.1 mol%, an electric resistance in an electrode formed increases. Furthermore, a charge density of the ion exchange layer is reduced and selective ion permeability is reduced. A content of the ionic monomer units is preferably 0.3 mol% or more, more preferably 1 mol% or more. A content of the ionic monomer units is 50 mol% or less. If the content is more than 50 mol%, an ion exchange layer formed becomes swellable, leading to insufficient membrane strength. A content of the ionic monomer units is preferably 30 mol% or less, more preferably 20 mol% or less.

In the light of endowing an ion exchange layer with higher ion permeability, it is desirable that the vinyl alcohol copolymer (P) just consists of the units of a monomer having an ionic group, vinyl alcohol monomer units and vinyl ester monomer units, but other monomer units can be contained without impairing the effects of the present invention. Examples of a monomer constituting such a monomer unit include α-olefins such as ethylene, propylene, 1-butene, isobutene and 1-hexene; acrylic acid or salts thereof; acrylic acid esters such as methyl acrylate, ethyl acrylate, n-propyl acrylate and isopropylacrylate; methacrylic acid or its salts; methacrylic acid esters such as methyl methacrylate, ethyl methacrylate, n-propyl methacrylate and isopropyl methacrylate; derivatives such as acrylamide, N-methylacrylamide and N-ethylacrylamide; methacrylamide derivatives such as methacrylamide, N-methylmethacrylamide and N-ethylmethacrylamide; vinyl ethers such as methyl vinyl ether, ethyl vinyl ether, n-propyl vinyl ether, isopropyl vinyl ether and n-butyl vinyl ether; hydroxyl-containing vinyl ethers such as ethylene glycol vinyl ether, 1,3-propanediol vinyl ether and 1,4-butanediol vinyl ether; allyl ethers such as allyl acetate, propyl allyl ether, butyl allyl ether and hexyl allyl ether; monomers having an oxyalkylene group; hydroxy-containing α-olefins such as isopropenyl acetate, 3-buten-1-ol, 4-penten-1-ol, 5-hexen-1-ol, 7-octen-1-ol, 9-decen-1-ol and 3-methyl-3-buten-1-ol; and monomers having a silyl group such as vinyltrimethoxysilane, vinyltriethoxysilane and vinyltriacetoxysilane. A proportion of monomer units other than units of a monomer having an ionic group, vinyl alcohol monomer units and vinyl ester monomer units to the total monomer units in the vinyl alcohol copolymer (P) is preferably 25 mol% or less, more preferably 20 mol% or less, particularly preferably 10 mol% or less.

There are no particular restrictions to a viscosity of an aqueous solution of the vinyl alcohol copolymer (P), but a viscosity is preferably 5 to 150 mPa·s as determined for a 4 wt% aqueous solution of the vinyl alcohol copolymer (P) at 20 °C by a B type viscometer under the conditions of a rotor revolution speed of 60 rpm.

In the light of further improving membrane strength and further reduction of a current resistance, the vinyl alcohol copolymer (P) is suitably a block copolymer (P’) containing the vinyl alcohol polymer block (A) and the ionic-group-containing polymer block (B) as components. The block copolymer (P’) contains the vinyl alcohol polymer block (A) and the ionic-group-containing polymer block (B) as components. In the block copolymer (P’), each monomer unit is contained as a block, so that swelling of the ion exchange layer formed with a solvent can be further inhibited, resulting in further improved membrane strength.

The block copolymer (P’) is categorized into one of two types, depending whether the ionic group in the polymer block (B) is cationic or anionic. The block copolymer (P’) is a cationic block copolymer (P1’) containing a vinyl alcohol polymer block (A) and a polymer block having a cationic group (B1) as components, or an anionic block copolymer (P2’) containing a vinyl alcohol polymer block (A) and a polymer block having an anionic group (B2) as components.

A repeating unit constituting the polymer block having a cationic group (B1) in the cationic block copolymer (P1’) can be, but not limited to, a repeating unit represented by any of general formulas (1) to (6).

A repeating unit constituting the polymer block having an anionic group (B2) in the anionic block copolymer (P2’) can be, but not limited to, a repeating unit represented by general formulas (7) or (8).

The block copolymer (P') is produced using at least one monomer having an ionic group and another monomer. This process is preferable in terms of high controllability of the types and the amounts of the components of the vinyl alcohol polymer block (A) and the ionic-group-containing polymer block (B) and easiness in industrial production. Particularly, more preferred is a process for producing a block copolymer (P') in which a vinyl alcohol polymer having a terminal mercapto group is radically polymerized with at least one monomer containing an ionic group.

There will be described a process for producing a desired block copolymer (P') using at least one monomer having an ionic group which is preferably used in the present invention, and another monomer.

A vinyl alcohol polymer having a terminal mercapto group can be produced by, for example, the process described in Patent Reference No. 5 or the like. Specifically, for example, a vinyl ester monomer such as vinyl acetate is radically polymerized in the presence of a thiol acid to provide a vinyl ester polymer which is then saponified.

A saponification degree of the vinyl alcohol polymer having a terminal mercapto group is preferably, but not limited to, 40 to 99.9 mol%. If a saponification degree is less than 40 mol%, crystallizability of the vinyl alcohol polymer block (A) may be reduced, leading to insufficient strength of the ion exchange layer. A saponification degree is more preferably 60 mol% or more, further preferably 80 mol% or more. Furthermore, a saponification degree of the vinyl alcohol polymer having a terminal mercapto group is generally 99.9 mol% or less. A saponification degree of the vinyl alcohol polymer is as determined in accordance with JIS K6726.

A polymerization degree of the vinyl alcohol polymer having a terminal mercapto group is preferably 100 or more and 3500 or less, more preferably 200 or more and 3000 or less, further preferably 250 or more and 2500 or less. If the polymerization degree is less than 100, membrane strength of the ion exchange layer containing the block copolymer (P') finally obtained may be insufficient. If the polymerization degree is more than 3500, the number of mercapto groups introduced into the vinyl alcohol polymer may be inadequate to efficiently provide the block polymer (P'). Here, a viscosity average polymerization degree of the vinyl alcohol polymer is as determined in accordance with JIS K6726.

The block copolymer (P') can be produced using the vinyl alcohol polymer having a terminal mercapto group thus obtained and an ionic-group containing monomer as described in, for example, Patent Reference No. 6.

That is, the block copolymer (P') can be produced by radically polymerizing a monomer having an ionic group in the presence of a vinyl alcohol polymer having a terminal mercapto group as described in, for example, Patent Reference No. 6. This radical polymerization can be conducted by any known method such as bulk polymerization, solution polymerization, pearl polymerization and emulsion polymerization. This polymerization is preferably conducted in a solvent which can dissolve a vinyl alcohol polymer having a terminal mercapto group such as a medium containing water or dimethyl sulfoxide as main components. The polymerization process can be any of batch, semi-batch and continuous types.

The above radical polymerization can be initiated using a common radical polymerization initiator, specifically an initiator suitable to a polymerization system, such as 2,2'-azobisisobutyronitrile, benzoyl peroxide, lauroyl peroxide, diisopropyl peroxycarbonate, potassium persulfate and ammonium persulfate. In polymerization in an aqueous phase, polymerization can be initiated by a redox reaction using a terminal mercapto group in a vinyl alcohol polymer and an oxidizing agent such as potassium bromate, potassium persulfate, ammonium persulfate and hydrogen peroxide.

When a monomer having an ionic group is radically polymerized in the presence of a vinyl alcohol polymer having a terminal mercapto group, it is desirable that a polymer system is acidic. This is because in a basic phase, mercapto groups are rapidly consumed due to their ionic addition to double bonds in the monomer, leading to significant reduction of a polymerization efficiency. It is preferable that in polymerization in an aqueous phase, all of polymerization processes are conducted at a pH of 4 or less.

In the light of endowing the ion exchange layer with higher ion permeability, it is desirable that the ionic-group-containing polymer block (B) is exclusively comprised of units of a monomer having an ionic group, but it can contain units of a monomer with no ionic groups, without impairing the effects of the present invention. Among monomers used for synthesis of the block copolymer (P'), a monomer constituting such monomer units with no ionic groups can be selected from the above-mentioned monomers which constitute monomer units other than units of a monomer having an ionic group, vinyl alcohol monomer units and vinyl ester monomer units used for synthesis of the vinyl alcohol copolymer (P). A proportion of units of a monomer having an ionic group to the total monomer units in the ionic-group-containing polymer block (B) is preferably 80 mol% or more, particularly preferably 90 mol% or more.

Generally, a reaction temperature of the above radical polymerization is suitably, but not limited to, 0 to 200 °C. By checking progress of polymerization by determining the amount of residual monomers by any of various chromatographic methods, NMR spectroscopy or the like for judging quenching of the polymerization reaction, a ratio of the polymer block (A) to the polymer block (B) can be adjusted to a desired value. The polymerization reaction can be quenched by a known procedure such as cooling of the polymerization system.

A random copolymer (P") produced by copolymerizing a monomer having an ionic group with a vinyl ester monomer followed by saponification can be suitably used as the vinyl alcohol copolymer (P).

A polymerization degree of the random copolymer (P") is preferably 100 to 10000, more preferably 200 to 9000, further preferably 250 to 8000. If a polymerization degree is less than 100, membrane strength of the ion exchange layer

containing the random copolymer (P") finally obtained may be insufficient. Here, a viscosity average polymerization degree of the random copolymer (P") is as determined in accordance with JIS K6726.

A saponification degree of the random copolymer (P") is preferably, but not limited to, 40 to 99.9 mol%. If a saponification degree is less than 40 mol%, crystallizability of the random copolymer (P") may be reduced, leading to insufficient strength of the ion exchange layer. A saponification degree is more preferably 60 mol% or more, further preferably 80 mol% or more. A saponification degree of the random copolymer (P") is as determined in accordance with JIS K6726.

Examples of a vinyl ester monomer used as a starting material for the random copolymer (P") include vinyl formate, vinyl acetate, vinyl propionate, vinyl butyrate, vinyl isobutyrate, vinylpivalate, vinyl versatate, vinyl caproate, vinyl caprylate, vinyl laurate, vinyl palmitate, vinyl stearate, vinyl oleate and vinyl benzoate, and among others, vinyl acetate is most preferable.

The random copolymer (P") can be produced by copolymerizing a monomer having an ionic group with a vinyl ester monomer followed by saponification. Specifically, it is preferable that the monomer having an ionic group and the vinyl ester monomer is copolymerized in an alcoholic solvent or neat followed by saponification of the copolymer obtained. A temperature during the copolymerization is preferably 0 to 200 °C, more preferably 30 to 140 °C. A copolymerization temperature lower than 0 °C is undesirable because an adequate polymerization rate is not achieved. A polymerization degree of 200 °C or higher is undesirable because production of the target copolymer becomes difficult.

A monomer having an ionic group can be copolymerized with a vinyl ester monomer by any polymerization style such as batch polymerization, semi-batch polymerization, continuous polymerization and semi-continuous polymerization. The polymerization method can be any known method such as bulk polymerization, solution polymerization, suspension polymerization and emulsion polymerization. Among these, bulk polymerization or solution polymerization in which polymerization is conducted in a neat system or in an alcoholic solvent is suitably employed, and for the purpose of producing a copolymer with a high polymerization degree, emulsion polymerization is employed. Examples of the alcoholic solvent can include, but not limited to, methyl alcohol, ethyl alcohol and propyl alcohol. These solvents can be used in combination of two or more.

An initiator used for the copolymerization of amonomer having an ionic group with a vinyl ester monomer can be appropriately selected from known azo initiators, peroxide initiators and redox initiators depending on a polymerization method. Examples of an azo initiator include 2,2'-azobisisobutyronitrile, 2,2'-azobis(2,4-dimethylvaleronitrile) and 2,2'-azobis(4-methoxy-2,4-dimethylvaleronitrile); examples of a peroxide initiator include percarbonates such as diisopropyl peroxydicarbonate, di-2-ethylhexyl peroxydicarbonate and diethoxyethyl peroxydicarbonate; perester compounds such as t-butyl peroxyneodecanate, α-cumyl peroxyneodecanate and t-butyl peroxydecanate; acetylcyclohexylsulfonyl peroxide; and 2,4,4-trimethylpentyl-2-peroxyphenoxy acetate. Furthermore, the above initiator can be combined with, for example, potassium persulfate, ammonium persulfate or hydrogen peroxide, to be an initiator. Furthermore, a redox initiator can be a combination of the above peroxide with a reducing agent such as sodium bisulfite, sodium bicarbonate, tartaric acid, L-ascorbic acid and Rongalite.

A vinyl ester copolymer produced by copolymerizing a monomer having an ionic group with a vinyl ester monomer can be saponified by applying alcoholysis or hydrolysis using a well-known basic catalyst such as sodium hydroxide, potassium hydroxide and sodium methoxide or an acid catalyst such as p-toluenesulfonic acid. A solvent which can be used for this reaction can be selected from alcohols such as methanol and ethanol; esters such as methyl acetate and ethyl acetate; ketones such as acetone and methyl ethyl ketone; and aromatic hydrocarbons such as benzene and toluene, which can be used alone or in combination of two or more. It is particularly convenient and preferable that the saponification reaction is conducted using sodium hydroxide as a catalyst in methanol or a mixed solution of methanol and methyl acetate as a solvent.

A content of the vinyl alcohol copolymer (P) in the ion exchange layer is preferably 50 % by weight or more, more preferably 60 % by weight or more, further preferably 70 % by weight or more. The ion exchange layer can contain multiple types of vinyl alcohol copolymers (P) ; it preferably contains either a vinyl alcohol copolymer (P1) copolymerized with a monomer having a cationic group or a vinyl alcohol copolymer (P2) copolymerized with a monomer having an anionic group.

The ion exchange layer can contain polymers other than the vinyl alcohol copolymer (P) and various additives without impairing the effects of the present invention. Examples of such a polymer include a vinyl alcohol polymer with no ionic groups and polyacrylamide. Examples of an additive to the ion exchange layer include a defoamer and a lower alcohol. A content of a polymer other than the vinyl alcohol copolymer (P) and additives in the ion exchange layer is preferably 50 % by weight or less, more preferably 40 % by weight or less, further preferably 30 % by weight or less.

For achieving selective ion permeability sufficient to be used as an electrode for a flow-through capacitor, the ion exchange layer preferably has a charge density of 0.3 mol $\cdot dm^{-3}$ or more, more preferably 0. 5 mol $\cdot dm^{-3}$ or more, further preferably 0.7 mol $\cdot dm^{-3}$ or more. If the charge density is less than 0.3 mol $\cdot dm^{-3}$, selective ion permeability of the ion exchange layer may be insufficient. A charge density of the ion exchange layer is preferably 3 mol $\cdot dm^{-3}$ or less, more preferably 2.7 mol $\cdot dm^{-3}$ or less, further preferably 2.5 mol $\cdot dm^{-3}$ or less. If the charge density is more than 3 mol

$\cdot dm^{-3}$, its hydrophilicity becomes so high that swelling cannot be controlled, leading to reduction in membrane strength.

A vinyl alcohol copolymer (P) contained in an ion exchange layer in an electrode of the present invention contains vinyl alcohol monomer units and units of a monomer having an ionic group. Vinyl alcohol monomer unit contribute to improvement in membrane strength, swelling inhibition and shape retention of the ion exchange layer, and units of a monomer having an ionic group contribute to achieving selective permeability. Such role allotment allows for satisfying both swelling inhibition, excellent membrane strength and excellent shape retention of the ion exchange layer, and higher selective ion permeability. In the light of improving such effects, it is preferable to use a block copolymer (P') as a vinyl alcohol copolymer (P). As described above, the block copolymer (P') consists of a vinyl alcohol polymer block (A) and an ionic-group-containing polymer block (B). The vinyl alcohol polymer block (A) which is a crystalline polymer contributes to improvement in membrane strength, swelling inhibition and shape retention of the ion exchange layer, and the ionic-group-containing polymer block (B) contributes to achieving ion selective permeability. Such role allotment by the polymer block (A) and polymer block (B) allowed for satisfying both swelling inhibition, excellent membrane strength and excellent shape retention of the ion exchange layer, and higher selective ion permeability in a further higher level.

The ion exchange layer containing the vinyl alcohol copolymer (P) has a small membrane resistance so that the electrode of the present invention has a small resistance. Furthermore, the ion exchange layer containing the vinyl alcohol copolymer (P) is highly hydrophilic, so that it is highly resistant to organic contamination.

A carbon material contained in the porous electrode layer can be activated carbon, carbon black or the like, and activated carbon is particularly preferably used. Activated carbon can take any shape including powder, particles, fiber and the like. Among others, activated carbon with a high-specific surface area is preferably used in the light of a larger amount of adsorbed ions. A BET specific surface area of the activated carbon with a high-specific surface area is preferably 700 $m^2/g$ or more, more preferably 1000 $m^2/g$ or more, further preferably 1500 $m^2/g$ or more.

A content of the carbon material in the porous electrode layer is preferably 70 % by weight or more, more preferably 80 % by weight or more. If a content of the carbon material is less than 70 % by weight, the amount of adsorbed ions may be insufficient.

The porous electrode layer can contain various additives without impairing the effects of the present invention. Examples of such an additive include a binder, a conducting agent, dispersant and a thickener. A content of the above additives in the porous electrode layer is preferably 30 % by weight or less, more preferably 20 % by weight or less.

Electric conductivity of the porous electrode layer can be appropriately adjusted, depending on an application of the electrode, and can be adjusted by using a conductive carbon material as the above carbon material, adding a conducting agent or the like.

A current collector layer used in the electrode of the present invention can be any material as long as it is highly electrically conductive and corrosion resistant, including a graphite sheet and a metal foil made of titanium, gold, platinum or a composite thereof. Among these, a graphite sheet is preferable in the light of excellent balance between corrosion resistance and conductivity. A thickness of the current collector layer is preferably, but not limited to, 5 to 5000 $\mu m$, more preferably 10 to 3000 $\mu m$.

In an electrode of the present invention, a current collector layer, a porous electrode layer and an ion exchange layer are arranged in this order. Here, the porous electrode layer and the ion exchange layer can be arranged only on one side of the current collector layer or on both sides, respectively. In an electrode in which the porous electrode layer and the ion exchange layer are arranged on both sides of the current collector layer, respectively, the ion exchange layers on both sides can have a fixed charge with the same signal or with a different signal, but the former is preferable.

There are no particular restrictions to a size of each layer as long as charge transfer between the current collector layer and the porous electrode layer is efficiently conducted, ion transfer between the porous electrode layer and the outside of the electrode is generally conducted via the ion exchange layer, and the porous electrode layer has a surface area sufficient to adsorbing a predetermined amount of ions, and the size can be appropriately adjusted, depending on an application of the electrode. Furthermore, the electrode of the present invention can have layers other than the current collector layer, the porous electrode layer and the ion exchange layer, without impairing the effects of the present invention.

The electrode of the present invention preferably has a configuration in which the porous electrode layer is formed directly on the surface of the current collector layer and the ion exchange layer is formed directly on the surface of the porous electrode layer. The vinyl alcohol copolymer (P) has a high affinity to the porous electrode layer, resulting in higher adhesiveness between the ion exchange layer and the porous electrode layer. Therefore, an interface resistance between the ion exchange layer and the porous electrode layer is reduced and the ion exchange layer is resistant to delamination. The vinyl alcohol polymer block (A) has particularly higher affinity to the porous electrode layer, so that the ion exchange layer containing the block copolymer (P') is particularly highly adhesive to the porous electrode layer.

In the light of excellent resistance to organic contamination, it is preferable that in the electrode of the present invention, the ion exchange layer is disposed on the surface.

There are no particular restrictions to a method for producing an electrode of the present invention, and preferred is a method comprising applying a slurry containing the carbon material and a solution containing the vinyl alcohol

copolymer (P) to the surface of the current collector layer, and then drying the coated film to form the porous electrode layer and the ion exchange layer. This method can provide an electrode having a current collector layer, a porous electrode layer and an ion exchange layer as an integrated entity. In this producing method, the slurry and the solution applied are simultaneously dried, and therefore, there are less defects in the ion exchange layer formed and adhesiveness between the porous electrode layer and the ion exchange layer is further improved.

There are no particular restrictions to a dispersion medium in the slurry as long as it can disperse starting materials for a porous electrode layer such as a carbon material, including water, an organic solvent and a mixture thereof. A composition of a dispersed material can be appropriately adjusted, depending on a composition of a porous electrode layer formed. Acontent of the dispersedmaterial in the slurry is generally, but not limited to, 10 to 60 % by weight.

There are no particular restrictions to a solvent in the solution containing the vinyl alcohol copolymer (P) used in the above manufacturing process as long as it can dissolve the vinyl alcohol copolymer (P), including water, an organic solvent and a mixture thereof. A composition of an elute can be appropriately adjusted, depending on a composition of an ion exchange layer formed. A concentration of an elute in the above solution is generally, but not limited to, 5 to 30 % by weight.

In terms of the order of applying the slurry and the solution in the above producing method, it is preferable that the slurry containing a carbon material and the solution containing a vinyl alcohol copolymer (P) are simultaneously applied to the surface of the current collector layer, or that the slurry containing a carbon material is applied to the surface of the current collector layer followed by applying the solution containing a vinyl alcohol copolymer (P) to the surface of the slurry. In the light of reducing defects in the ion exchange layer formed, the former is more preferable.

An application apparatus used for simultaneously applying the slurry and the solution can be any of known application apparatuses without any particular restrictions. For example, a curtain type applicator, an extrusion type applicator and a slide type applicator can be used. When the slurry and the solution are simultaneously applied, any operation can be employed as long as the slurry and the solution are applied in one application process; specifically, the slurry and the solution are preliminarily combined before application of the mixture to the surface of the current collector layer or the slurry is applied to the surface of the current collector layer and immediately after that, the solution is applied to the surface of the applied slurry, but the former is preferable. There are no particular restrictions to an application apparatus used for applying the solution after application of the slurry, and any known application apparatus can be used, including an extrusion type applicator, a roll coater, a comma coater, a kiss coater, a gravure coater and a slide bead coater.

In the light of ensuring the amount of adsorbed ions, strength of a coated film, other performance, handling properties and the like which are required when the electrode is used as an electrode for a flow-through capacitor, a thickness of the porous electrode layer containing a carbon material in the electrode of the present invention is preferably 50 to 1000 $\mu$m. If a thickness of the porous electrode layer is less than 50 $\mu$m, ion adsorbability may be insufficient. On the other hand, if a thickness of the porous electrode layer is more than 1000 $\mu$m, the porous electrode layer is fragile, so that defects such as cracks may tend to occur. A thickness of the porous electrode layer is more preferably 100 to 800 $\mu$m, further preferably 150 to 500 $\mu$m. Here, a thickness of the porous electrode layer is a thickness of the dry porous electrode layer.

In the light of ensuring ion permeability, other performance, surface coatability and the like which are required when the electrode is used as an electrode for a flow-through capacitor, a thickness of the ion exchange layer in the electrode of the present invention is preferably 1 to 100 $\mu$m. If a thickness is less than 1 $\mu$m, coating of the surface of the porous electrode layer by the ion exchange layer may be insufficient. On the other hand, if a thickness is more than 100 $\mu$m, ion permeation resistance may be increased. A thickness of the ion exchange layer is more preferably 3 to 80 $\mu$m, further preferably 5 to 50 $\mu$m. Here, a thickness of the ion exchange layer is a thickness of the dry ion exchange layer.

In the above producing method, it is preferable that a coated film is dried followed by heating. Heating of the coated film initiates physical crosslinking in the vinyl alcohol copolymer (P), resulting in further increase in mechanical strength of the ion exchange layer. Furthermore, when a block copolymer (P') is used as a vinyl alcohol copolymer (P), microphase separation of block components in the block copolymer (P') is accelerated and thus formation of ion permeation channels becomes easier. Heating is generally, but not limited to, conducted using a hot-air dryer. A heating temperature is preferably, but not limited to, 100 to 250 °C. If a heating temperature is lower than 100 °C, mechanical strength may not be improved or formation of a microphase separation structure is not accelerated. A heating temperature is more preferably 110 °C or higher, further preferably 120 °C or higher. If a heating temperature is higher than 250 °C, the vinyl alcohol copolymer (P) may melt. A heating temperature is more preferably 230 °C or lower, further preferably 200 °C or lower.

In the above producing method, it is also preferable that after drying the coated film, it is further crosslinked. Crosslinking further increases mechanical strength of the ion exchange layer obtained. Crosslinking can be conducted by any method by which molecular chains in a polymer can be mutually bound via chemical bonding. In a common method, a current collector layer having a dried layer of the slurry and a dried layer of the solution containing a vinyl alcohol copolymer (P) on its surface is immersed in a solution containing a crosslinking agent. Examples of a crosslinking

agent include glutaraldehyde, formaldehyde and glyoxal. A concentration of the crosslinking agent is generally 0.01 to 10 % by volume as a volume concentration of a crosslinking agent to a solution.

When an electrode of the present invention is produced, both or one of heating and crosslinking can be conducted. When both heating and crosslinking are conducted, heating can be conducted before crosslinking, crosslinking can be conducted before heating, or both can be simultaneously conducted. Heating before crosslinking is preferable in the light of inhibition of swelling of the ion exchange layer obtained.

As described above, the electrode of the present invention can efficiently and stably conduct adsorption and desorption of ions for a long period. The electrode can be, therefore, suitably used as an electrode for a flow-through capacitor or the like.

There will be described adsorption and desorption of ions by the electrode, for, as an example, a flow-through capacitor employing the electrode which is a suitable embodiment of an electrode of the present invention. FIG. 1 schematically shows, as an example, adsorption of ions by a flow-through capacitor 1 using an electrode 2 and an electrode 3 of the present invention.

An electrode 2 has an anion-exchange layer 4 containing a copolymer (P1) copolymerized with a monomer having a cationic group as an ion exchange layer, in which a current collector layer 6, a porous electrode layer 5 and an anion-exchange layer 4 are arranged in this order. An electrode 3 has a cation-exchange layer 7 containing a copolymer (P2) copolymerized with a monomer having an anionic group as an ion exchange layer, in which a current collector layer 9, a porous electrode layer 8 and a cation-exchange layer 7 are arranged in this order. In the flow-through capacitor 1, a flow path 10 is formed between the electrode 2 and the electrode 3, and the anion-exchange layer 4 and the cation-exchange layer 7 are disposed, mutually facing via the flow path 10.

In the flow-through capacitor 1, the flow path 10 can be formed by, for example, disposing a separator layer between the anion-exchange layer 4 and the cation-exchange layer 7. The separator layer used for forming the flow path 10 can be made of any material as long as it is electrically insulative and capable of easily permeating a liquid, including a fibrous sheet such as a paper, a woven fabric and an unwoven fabric; a foamed resin sheet and a resin net. A distance between electrodes defined by a thickness of the flow path 10 is generally 50 to 1000 μm.

Since in the flow-through capacitor 1, the anion-exchange layer 4 and the cation-exchange layer 7 mutually face via the flow path 10, transfer of anions 11 between the porous electrode layer 5 and the flow path 10 is conducted generally via the anion-exchange layer 4, while transfer of cations 12 between the porous electrode layer 8 and the flow path 10 are generally conducted via the cation-exchange layer 7.

When ions in a liquid fed into the flow path 10 are adsorbed, a voltage is applied between the electrode 2 and the electrode 3 such that a fixed charge in the ion exchange layer in each electrode has the same sign as that of a charge given to the porous electrode layer. That is, a positive charge is given to the porous electrode layer 5 while a negative charge is given to the porous electrode layer 8. Anions 11 in the flow path 10 pass through the anion-exchange layer 4 into the electrode 2, and finally adsorbed to the porous electrode layer 5 having a positive charge. On the other hand, cations 12 in the flow path 10 pass through the cation-exchange layer 7 into the electrode 3, and finally adsorbed to the porous electrode layer 8 having a negative charge.

Even when cations 13 exist in the porous electrode layer 5 in the electrode 2 during ion adsorption, the cations 13 cannot pass through the anion-exchange layer 4, so that they little leak to the flow path 10. Then, even when anions 14 exist in the porous electrode layer 8 in the electrode 3, the anions 14 cannot pass through the cation-exchange layer 7, so that they little leak to the flow path 10. Therefore, reduction in a current efficiency due to leakage of ions in the electrode 2 and the electrode 3 into the flow path 10 rarely occurs.

FIG. 2 schematically shows, as an example, desorption of ions by a flow-through capacitor 1 using an electrode 2 and an electrode 3 of the present invention. The ions adsorbed by the porous electrode layer 5 and the porous electrode layer 8 are desorbed by applying a charge having an opposite sign to that for adsorption to the porous electrode layer 5 and the porous electrode layer 8. And anions 11 desorbed from the porous electrode layer 5 pass through the anion-exchange layer 4 to the flow path 10, but are little transferred to the electrode 3 having the cation-exchange layer 7 to be re-adsorbed by the porous electrode layer 8. Furthermore, cations 12 desorbed from the porous electrode layer 8 pass through the cation-exchange layer 7 to the flow path 10, but are little transferred into the electrode 2 having the anion-exchange layer 4 to be re-adsorbed by the porous electrode layer 5. Therefore, when ions are adsorbed next time, reduction in an adsorption efficiency due to re-adsorbed ions rarely occurs.

A flow-through capacitor 1 of the present invention can have a plurality of capacitor units in which a flow path 10 is formed between the electrode 2 having the anion-exchange layer 4 and the electrode 3 having the cation-exchange layer 7. That is, the flow-through capacitor of the present invention can be a stack of multiple capacitor units described above. It is preferable that the capacitor units are stacked such that current collector layers in electrodes in which an ion exchange layer has a fixed charge having the same sign mutually face. Alternatively, a flow-through capacitor consisting of the plurality of capacitor units can be produced by stacking electrodes in which a porous electrode layer and an ion exchange layer are disposed on both sides of a current collector layer as described above, via a flow path.

As described above, an electrode of the present invention can efficiently and stably adsorb and desorb ions

for a long period. Therefore, a flow-through capacitor employing the electrode allows for efficient and stable desalination and separation of an ionic substance and a nonionic substance for a long period.

FIG. 3 schematically shows an example of a desalination apparatus 15 having the flow-through capacitor 1 of the present invention, and FIG. 4 is an exploded perspective view of the flow-through capacitor 1 in the desalination apparatus 15. The desalination apparatus 15 has the flow-through capacitor 1, a container 16 containing it and a direct-current power supply 17, and the direct-current power supply 17 is connected to each of the electrode 2 and the electrode 3 such that a cathode and an anode are exchangeable; and the container 16 has an inlet 18 for a liquid containing an ionic substance to be desalinized with flow-through capacitor 1 and an outlet 19 for a desalinized liquid.

The flow-through capacitor 1 in the desalination apparatus 15 is comprised of a stack of capacitor units 20 in which a flow path 10 is formed between the electrode 2 having an anion-exchange layer 4 and the electrode 3 having a cation-exchange layer 7. Here, they are preferably stacked such that current collector layers 5 in the electrode 2 mutually face and current collector layers 8 in the electrode 3 mutually face.

In the flow-through capacitor 1, a through-hole 21 is formed in the center of the electrodes other than the terminal electrode in the side of the inlet 18 and the flow path 10, and the through-hole closest to the outlet 19 is connected to the outlet 19. A liquid fed into the container 16 from the inlet 18 is introduced into the flow path 10 from the periphery of the flow path 10, desalinated in the flow path 10, then run through the through-hole 21, and is discharged from the outlet 19. The arrows in FIGs. 3 and 4 indicate a flowing direction of the liquid. In the desalination apparatus 15 shown in FIG. 3, the fed liquid is discharged after running through the flow path 10, but a desalination apparatus 15 can be formed such that the liquid is discharged after running through a plurality of flow paths 10.

Each electrode can be connected to the direct-current power supply 17 by, for example, forming a lead in a part of the current collector layer. A direction of connection of the direct-current power supply 17 must be such that a cathode and an anode are exchangeable. FIG. 3 shows a desalination apparatus 15 in which a cathode of the direct-current power supply 17 is connected to the electrode 2 and an anode is connected to the electrode 3.

There will be described a desalination method using the desalination apparatus 15. Desalination using the desalination apparatus 15 is preferably conducted by a process comprising a first step: a liquid containing an ionic substance is fed to the flow path 10 between the electrode 2 having the anion-exchange layer 4 as an cathode and the electrode 3 having the cation-exchange layer 7 as an anode while a voltage is applied to each electrode by the direct-current power supply 17 to initiate adsorption of ions in the liquid onto the porous electrode layer 5 and the porous electrode layer 8 and then the liquid is discharged and collected; and a second step: the liquid is fed to the flow path 10 while a voltage is applied to the electrode 2 having the anion-exchange layer 4 as an anode and the electrode 3 having the cation-exchange layer 7 as a cathode by the direct-current power supply 17, to initiate desorption of the ions adsorbed to the porous electrode layer 5 and the porous electrode layer 8 in the first step, and the liquid containing the desorbed ions is discharged.

In the first step, the liquid containing the ionic substance is desalinated and the desalinated liquid is collected. The electrode 2 is connected to the cathode in the direct-current power supply 17, and the electrode 3 is connected to the anode in the direct-current power supply 17. The liquid containing the ionic substance to be desalinated is fed to the inlet 18. After feeding, the liquid is introduced to the flow path 10, ions derived from the ionic substance in the liquid are adsorbed by the porous electrode layer 5 and the porous electrode layer 8 in the electrode 2 and the electrode 3 to which a voltage is applied. Here, an adsorption time is appropriately adjusted, depending on a concentration of the target ionic substance and the like. A voltage applied between the electrode 2 and the electrode 3 is preferably, but not limited to, 0.5 to 3 V. The desalinated liquid is collected from the outlet 19.

In the second step, ions adsorbed by the porous electrode layer 5 and the porous electrode layer 8 in the first step is desorbed, to clean the electrode 2 and the electrode 3. A cleaning liquid is fed to the flow path 10, the electrode 2 is connected to the anode of the direct-current power supply 17, and the electrode 3 is connected to the cathode, to initiate desorption of the adsorbed ions. There are no particular restrictions to a voltage applied between the electrode 2 and the electrode 3, and a desorption time. A voltage applied between the electrode 2 and electrode 3 is generally 0.5 to 3 V. The desorbed ions are transferred into the liquid in the flow path 10. A cleaning liquid containing desorbed ions is discharged from the outlet 19. Thus, the desalination apparatus 15 with the electrode 2 and the electrode 3 being cleaned is again used for the desalination (the first step). When the electrode is contaminated after desalination for a long period, the electrode can be washed with, for example, an alkaline cleaning liquid. Since the ion exchange layer in the electrode of the present invention is highly resistant to alkali, such cleaning does not significantly affect the electrode. According to such a desalination method using the desalination apparatus 15, the desalinated liquid can be easily collected.

## EXAMPLES

There will be further detailed the present invention with reference to Examples. The present invention is not limited to these examples. In these examples, unless otherwise indicated, "%" and "part(s)" are by weight.

The properties of an electrode produced were determined by the following methods.

(1) Measurement of an electrode resistance

FIG. 5 schematically shows a method for measuring an electrode resistance in Examples. As shown in FIG. 5, between cylindrical titanium electrodes 22 with a diameter of 20 mm and a height of 10 mm are arranged an electrode 23 cut into a circle with a diameter of 12 mm, a separator 24 (Nippon Tokushu Fabric Inc., "LS60", thickness: 90 μm) cut into a circle with a diameter of 16 mm, and an electrode 23 cut into a circle with a diameter of 12 mm in this order. Here, both of the two electrodes are disposed such that a current collector layer faces the side of the titanium electrode 22 while an ion exchange layer faces the side of the separator 24. While pressing the upper and the lower cylindrical titanium electrodes 22 at a pressure of 1 to 2 $kg/cm^2$, an alternating-current impedance is measured in the frequency range of 8 mHz to 1 MHz using a potentiostat/galvanostat VSP (from BioLogic Company), and a real part resistance at a frequency of 1 Hz is defined as an impedance resistance, which is an electrode resistance.

(2) Interface adhesiveness test between an ion exchange layer and a porous electrode layer

After water adhering to the surface of the electrode was removed by a filter paper, Scotch tape (No.405, width: 24 mm) from Nichiban Co., Ltd. is adhered to the surface of the ion exchange layer, and then the air between the ion exchange layer and a tape was removed by fingers. Then, the end of the Scotch tape was pinched by fingers and rapidly pulled up in a direction vertical to the surface of the ion exchange layer to peel the tape off. Interface adhesiveness was evaluated by the following assessment method.

A: the ion exchange layer in the part to which Scotch tape was adhered was not peeled off at all.
B: the ion exchange layer in the part to which Scotch tape was adhered was partly peeled off.
C: the ion exchange layer in the part to which Scotch tape was adhered was substantially peeled off.

(3) Alkali resistance test

An electrode was immersed in a 5 % aqueous solution of sodium hydroxide for 10 hours (temperature: 25 °C), which was thoroughly replaced with an ion-exchange water. Then, an electrode resistance was measured as described above.
An increase percentage was calculated in accordance with the following equation.

$$\text{Increase percentage (\%)} = \{(\text{Resistance after alkali immersion} - \text{Resistance before alkali immersion}) / \text{Resistance before alkali immersion}\} \times 100$$

(4) Visual observation of the electrode surface

The surface of the obtained electrode was visually observed for defects due to foaming of an ion exchange layer.
The degree of defect generation due to foaming was evaluated in the following three rating.

A: No defects due to foaming were observed in the surface of an ion exchange layer.
B: Defects due to foaming were observed partly in the surface of an ion exchange layer.
C: Defects due to foaming were observed in the whole surface of an ion exchange layer.

(Synthesis of a polyvinyl alcohol polymer having a terminal mercapto group)

In accordance with the process described in Japanese published unexamined application No. 59-187003, a polyvinyl alcohol having a terminal mercapto group (PVA-1) shown in Table 1 was synthesized. Table 1 shows a polymerization degree of PVA-1 and a saponification degree.

Table 1

| | Polymerization degree | Saponification degree (mol%) | Terminal group |
|---|---|---|---|
| PVA-1 | 1550 | 98.5 | Mercapto group |

Cationic block copolymers (P1') : P-1 to P-5 which act as an anion-exchange layer, and, anionic block copolymers (P2') : P-6 to P-9 which act as a cation-exchange resin were synthesized as described below.

(Synthesis of P-1)

In a 5-liter four-necked separable flask equipped with a reflux condenser and a mixing impeller were charged 2730 g of water and 344 g of a vinyl alcohol polymer PVA-1 having a terminal mercapto group, and the mixture was heated to 95 °C with stirring to dissolve the vinyl alcohol polymer and then was cooled to room temperature. To the resulting aqueous solution, 1/2 N sulfuric acid was added to adjust pH to 3.0. Separately, 190 g of methacrylamidopropyltrimethylammonium chloride was dissolved in 220 g of water, and the solution was added to the previous aqueous solution with stirring. The resulting aqueous solution was heated to 70 °C, and then nitrogen was bubbled into the aqueous solution for 30 min to substitute the atmosphere with nitrogen. After the nitrogen substitution, to the aqueous solution was added portionwise 121 mL of a 2.5 % aqueous solution of potassium persulfate over 1. 5 hours to initiate and progress block copolymerization, and then a temperature of the reaction solution was kept at 75 °C for 1 hour to further progress the polymerization. Next, the reaction solution was cooled to afford an aqueous solution of vinyl alcohol-(b)-p-methacrylamidopropyltrimethylammonium chloride block copolymer with a solid concentration of 15 %. After drying a part of the resulting aqueous solution, the residue was dissolved in deuterated water and analyzed by $^{1}$H-NMR spectrometry at 400 MHz. A content of p-methacrylamidopropyltrimethylammonium chloride units in the polymer obtained was 10 mol%. A viscosity of a 4 wt% aqueous solution of P-1 at 20 °C as measured by a B type viscometer at 60 rpm of a rotor revolution speed was 16 mPa·s.

(Synthesis of P-2 to P-9)

P-2 to P-9 were produced as described for P-1, except that the polymerization conditions such as the type and a charge of an ionic-group-containing monomer and the amount of a polymerization initiator were substituted with those shown in Tables 2 and 3. The physical properties of the polymers obtained are shown in Tables 2 and 3.

Table 2

| | Polymerization conditions | | | | | | | | | Block copolymer (P') | |
|---|---|---|---|---|---|---|---|---|---|---|---|
| | Vinyl alcohol polymer | | Cationic-group-containing monomer[1)] | | Water (g) | Aqueous solution of an initiator | | Polymerizaztion time (hr) | Solid concentration (wt%) | Viscosity[2)] (mPa·s) | Content of ionic monomer units (mol%) |
| | Type | Charge (g) | Type | Charge (g) | | Concentration (wt%) | Amount (mL) | | | | |
| P-1 | PVA-1 | 344 | MAPTAC | 190 | 2950 | 2.5 | 121 | 1.5 | 15 | 16 | 10 |
| P-2 | PVA-1 | 344 | DADMAC | 140 | 2700 | 2.5 | 121 | 1.5 | 15 | 18 | 10 |
| P-3 | PVA-1 | 344 | VBTMAC | 190 | 2950 | 2.5 | 121 | 1.5 | 15 | 18 | 10 |
| P-4 | PVA-1 | 344 | VBTMAC | 90 | 2250 | 2.5 | 121 | 1.5 | 16 | 16 | 5 |
| P-5 | PVA-1 | 344 | VBTMAC | 8.8 | 1800 | 2.5 | 121 | 1.5 | 16 | 14 | 0.5 |

1)MAPTAC:Methacrylamidopropyltrimethylammonium chloride, DADMAC: Diallyldimethylammnoium chloride, VBTMAC: Vinylbenzyltrimethylammoium chloride
2)Measured by a B type viscometer (concentration: 4 %, Temperature: 20 °C, rotor revolution speed: 60 rpm)

Table 3

| | Polymerization conditions | | | | | | | | | Block copolymer (P') | |
|---|---|---|---|---|---|---|---|---|---|---|---|
| | Vinyl alcohol polymer | | Cationic-group-containing monomer[1)] | | Water (g) | Aqueous solution of an initiator | | Polymerization time (hr) | Solid concentration (wt%) | Viscosity[2)] (mPa·s) | Content of ionic monomer units (mol%) |
| | Type | Charge (g) | Type | Charge (g) | | Concentration (wt%) | Amount (mL) | | | | |
| P-6 | PVA-1 | 344 | AMPS | 198 | 3050 | 2.5 | 121 | 1.5 | 15 | 16 | 10 |
| P-7 | PVA-1 | 344 | PStSS | 183 | 3050 | 2.5 | 121 | 1.5 | 15 | 18 | 10 |
| P-8 | PVA-1 | 344 | PStSS | 86 | 2200 | 2.5 | 121 | 1.5 | 16 | 16 | 5 |
| P-9 | PVA-1 | 344 | PStSS | 8.8 | 1800 | 2.5 | 121 | 1.5 | 16 | 14 | 0.5 |

[1)]AMPS:sodium 2-acrylamide-2-methylpropanesulfonate, PStSS: sodium p-styrenesulfonate
[2)]Measured by a B type viscometer (concentration: 4 %, Temperature: 20 °C, rotor revolution speed: 60 rpm)

A random copolymer P-10 having a cationic group and a random copolymer P-11 having an anionic group were synthesized as described below.

(Synthesis of P-10)

In a 6-liter separable flask equipped with a stirrer, a temperature sensor, a dropping funnel and a reflux condenser were charged 1960 g of vinyl acetate, 820 g of methanol (MeOH) and 23 g of a 30 wt% solution of methacrylamidopropyltrimethylammonium chloride in methanol, and with stirring, the atmosphere in the flask was substituted with nitrogen and then an internal temperature was raised to 60 °C. To the reaction solution was added 20 g of methanol containing 0.4 g of 2,2'-azobisisobutyronitrile (AIBN), to initiate polymerization reaction. From the start of the polymerization, a 30 wt% solution of methacrylamidopropyltrimethylammonium chloride in methanol (total: 300 g) was added portionwise to the reaction solution, allowing for proceeding polymerization reaction for 4 hours, and then the polymerization reaction was quenched. A solid concentration of the reaction solution at the end of the polymerization reaction, that is, a solid content of the whole polymerization reaction slurry, was 22.3 % by weight. Next, methanol stream was introduced into the reaction solution for expelling unreacted vinyl acetate monomer to give a methanol solution containing 55 % by weight of a vinyl ester copolymer.

To a 55 wt% solution of this vinyl ester copolymer in methanol were sequentially added methanol and a 10 wt% of sodium hydroxide in methanol with stirring such that a molar ratio of sodium hydroxide to vinyl acetate units in the copolymer was to be 0.025 and a solid concentration of the vinyl ester copolymer was to be 30 % by weight, and a saponification reaction was initiated at 40 °C.

Immediately after forming a gellated material in the course of saponification reaction, this was removed from the reaction system and crushed. Next, one hour after gel formation, methyl acetate was added to this crushed material for neutralization, to afford a swollen cationic polymer (random copolymer) of poly(vinyl alcohol-methacrylamidopropyltrimethylammonium chloride). To this swollen cationic polymer was added methanol in a 6-fold amount by weight (bath ratio: 6) based on the polymer, and the polymer was washed under reflux for one hour and collected by filtration. The polymer was dried at 65 °C for 16 hours. The polymer obtained was dissolved in deuterated water, and analyzed by $^1$H-NMR spectrometry at 400 MHz. Consequently, a content of methacrylamidopropyltrimethylammonium chloride units was 5 mol%. Furthermore, a polymerization degree was 1500, and a saponification degree was 98.5 mol%. The physical properties of the random copolymer having a cationic group are shown in Table 4.

(Synthesis of P-11)

P-11 was produced as described for P-10, changing the factors such as the polymerization conditions such as the charges of vinyl acetate (VAc) and methanol (MeOH), the charge and the type of an ionic-group-containing monomer, the amount of a polymerization initiator, and the conditions of portionwise addition of a monomer having an ionic group and the saponification conditions as shown in Table 4. Table 4 shows the physical properties of the random copolymer having an anionic group obtained.

Table 4

| | Polymerization conditions | | | | | | | | | Saponification conditions | | Vinyl alcohol polymer | | |
|---|---|---|---|---|---|---|---|---|---|---|---|---|---|---|
| | Vinyl acetate (g) | Ionic-group-containing monomer: Type[1) | Ionic-group-containing monomer: MeOH solution concentration (%) | Ionic-group-containing monomer: Initial charge (g) | Ionic-group-containing monomer: Portionwise addition amount (g) | MeOH (g) | AIBN (g) | Polymerization time (hr) | Solid concentration (wt%) | Saponification concentration (wt%) | NaOH molar ratio | Saponification degree (mol%) | Polymerization degree | Content of ionic monomer units (mol%) |
| P-10 | 1960 | MAPTAC | 30 | 23 | 300 | 840 | 0.4 | 4 | 22.3 | 30 | 0.025 | 98.5 | 1500 | 5 |
| P-11 | 1960 | AMPS | 25 | 70 | 390 | 840 | 0.4 | 4 | 21.7 | 30 | 0.025 | 98.5 | 1500 | 5 |

[1)] MAPTAC: Methacrylamidopropyltrimethylammonium chloride, AMPS: sodium 2-acrylamide-2-methylpropanesulfonate

Example 1

Production of electrode-1

(Preparation of an aqueous solution of an ionic block copolymer)

To a cationic block copolymer (P1'): P-1 was added a requisite amount of deionized water to prepare a 10 % aqueous solution. As measured by a B type viscometer (Tokimec Inc.), a viscosity of the aqueous solution obtained at 25 °C was 650 mPa·s.

(Preparation of a slurry containing a carbon material)

Activated carbon (BET adsorption area: 1800 $m^2/g$), conductive carbon black, carboxymethylcellulose and water were combined at a weight ratio of 100: 5: 1.5:140 and the mixture was then kneaded. To 100 parts by weight of the massive kneaded material were added 20 parts by weight of water and 15 parts by weight of an aqueous SBR emulsion binder (solid content: 40 % by weight), and the mixture was kneaded to afford an activated-carbon slurry with a solid content of 36 %. As measured by a B type viscometer (Tokimec Inc.), a viscosity of the slurry obtained at 25 °C was 3000 mPa·s.

(Production of an electrode integrated with an ion exchange layer)

In a double-barreled microfilm applicator from Coating Tester Co. , Ltd. (application width: 9 cm), the slurry containing a carbon material described above and the aqueous solution of P-1 described above were set as the lower side and the upper side, respectively, and simultaneously applied onto a swollen graphite sheet (thickness: 250 μm) from Mersen FMA Japan K. K. as a current collector layer. Here, after contacting the slurry with the aqueous solution, they are applied onto the graphite sheet. Then, the product was dried at a temperature of 90 °C for 10 min by a hot-air drier "DKM400" (from YAMATO). A cross-section of the laminate obtained was observed by a scanning electron microscope "S-3000" (Hitachi, Ltd.). Consequently, a thickness of the porous electrode layer containing a carbon material was 280 μm, and a thickness of the cationic block copolymer (P1'): P-1 layer was 10 μm. FIG. 6 shows an electron microgram of the cross-section of the porous electrode layer 25 and the cationic block copolymer (P1') layer 26 in this product.

The laminate obtained was heated at 160 °C for 30 min for physical crosslinking. Subsequently, the laminate was immersed in a 2 mol/L aqueous solution of sodium sulfate. To the aqueous solution was added concentrated sulfuric acid to adjust pH to 1, and then the laminate was immersed in a 0.5 vol% aqueous solution of glutaraldehyde, which was then stirred with stirrer at 50 °C for 1 hour to initiate crosslinking reaction. Here, the aqueous solution of gluraraldehyde was "gluraraldehyde" from Ishizu Pharmaceutical Co., Ltd. (25 % by volume) diluted with water. After the crosslinking, the laminate was immersed in deionized water while replacing deionized water several times, until the cationic block copolymer (P1'): P-1 layer reached swelling equilibrium, to produce electrode-1 as an electrode integrated with an ion exchange layer. The surface of the electrode integrated with an ion exchange layer obtained was visually observed, and consequently, no defects due to foaming were observed.

(Evaluation of the electrode integrated with an ion exchange layer)

The electrode-1 thus produced was cut into a desired size to prepare a measurement sample. Using the measurement sample obtained, measurement of an electrode resistance and an interface adhesiveness test were conducted as described above. The results are shown in Table 5.

Examples 2 to 9, 11 to 19 and 21, as well as Comparative Example 1

Production of electrode-2 to 9, 11, 12, 13 to 20 and 22

Electrodes were produced as described in Example 1, except that the type of a vinyl alcohol copolymer and a thickness of the ion exchange layer, a BET adsorption surface area and a thickness of activated carbon used for a slurry containing a carbon material, and a heating temperature were replaced with those indicated in Tables 5 and 6. The surface of each electrode produced was visually observed. Then, as described above, measurement of an electrode resistance, an alkali resistance test and an interface adhesiveness test were conducted. The results are shown in Tables 5 and 6.

Example 10

Production of electrode-10

(Preparation of an electrode layer slurry containing an aqueous solution of an ionic block copolymer and a carbon material)

An aqueous solution of cationic block copolymer (P1') : P-3 and a slurry containing a carbon material were prepared as described Example 3.

(Production of an electrode integrated with an ion exchange layer)

A slurry containing a carbon material was applied onto a swollen graphite sheet (thickness : 250 μm) from Mersen FMA Japan K. K. as a current collector layer using an applicator bar (application width: 10 cm). Next, an aqueous solution of P-3 was applied onto the slurry layer not dried, using an applicator bar (application width: 14 cm). Next, the product was dried at a temperature of 90 °C for 10 min by a hot-air dryer "DKM400" (from YAMATO). A cross-section of the laminate obtained was observed by a scanning electron microscope "S-3000" (Hitachi, Ltd.). Consequently, a thickness of the porous electrode layer containing a carbon material was 280 μm, and a thickness of the cationic block copolymer P-3 layer was 10 μm.

Electrode-10 was produced by conducting heating and crosslinking of the obtained laminate, and swelling of the laminate with deionized water as described in Example 1. The processing conditions herein are also shown in Table 5. The surface of electrode -10 obtained was visually observed, and consequently, defects due to foaming were observed in part. Furthermore, measurement of an electrode resistance and an interface adhesiveness test were conducted as described above. The results of these tests are shown Table 5.

Example 20

Production of electrode-21

Electrode-21 was produced as described in Example 10, except that an anionic block copolymer (P2'): P-7 was used as an ionic block copolymer (P'). Then, as described above, observation of the surface of the electrode obtained, measurement of an electrode resistance, an alkali-resistance test and an interface adhesiveness test were conducted. The results are shown in Table 6.

Comparative Example 2

Production of electrode-23

(Preparation of an aqueous solution of a vinyl alcohol polymer: P-12)

In a one-liter four-necked separable flask equipped with a reflux condenser and a mixing impeller were charged 528 g of water and 72 g of an unmodified vinyl alcohol polymer "PVA117" (viscosity average polymerization degree: 1700, saponification degree: 98.5 mol%) from Kuraray Co. , Ltd. , and the mixture was heated to 95 °C with stirring to dissolve the vinyl alcohol polymer, and then cooled to room temperature. Subsequently, to the mixture was added 69.4 g of an aqueous solution of sulfosuccinic acid (concentration: 70 % : Aldrich) and the mixture was stirred to give a homogeneous mixture (a mole number of sulfosuccinic acid/a mole number of OH groups in the vinyl alcohol polymer = 0.15). A viscosity of the aqueous solution P-12 was measured by a B type viscometer (Tokimec Inc.), and was 960 mPa·s.

(Preparation of an electrode layer slurry containing a carbon material)

A slurry containing a carbon material was prepared as described in Example 1.

(Production of an electrode integrated with an ion exchange layer)

The slurry and an aqueous solution of P-12 was applied onto a swollen graphite sheet as described in Example 1, substituting the above aqueous solution of P-12 for the aqueous solution of the ionic block copolymer, and then the product was dried. The cross-section of the laminate obtained was observed by a scanning electron microscope "S-3000" (Hitachi, Ltd.). Consequently, a thickness of the porous electrode layer containing a carbon material was 280 μm, and a thickness of the vinyl alcohol polymer P-12 layer was 10 μm.

The laminate obtained was heated at 130 °C for one hour, to initiate chemical crosslinking of sulfosuccinic acid and PVA. After the crosslinking, the laminate was immersed in deionized water while replacing deionized water several times, until the vinyl alcohol polymer layer reached swelling equilibrium, to produce an electrode integrated with an ion exchange layer. The surface of the electrode integrated with an ion exchange layer obtained was visually observed, and consequently, no defects due to foaming were observed. Furthermore, as described above, measurement of an electrode resistance, an alkali-resistance test and an interface adhesiveness test were conducted. The results are shown in Table 6.

Table 5

| | | Application conditions | | | | | | | | | | Heating conditions | Crosslinking conditions | | Evaluation of electrode performance | | |
|---|---|---|---|---|---|---|---|---|---|---|---|---|---|---|---|---|---|
| | | | Anion exchange layer | | | | | Porous electrode layer | | | | | | | | | |
| | | Application method | Type | Content of ionic monomer units (mol%) | Concentration (wt%) | Viscosity (mPa·s) | Thickness[2] (μm) | Charcoal BET Adsorption area ($m^2/g$) | Concentration (wt%) | Viscosity (mPa·s) | Thickness[2] (μm) | Temperature (°C) | Type of a cross-linking agent | Concent-Ration (wt%) | Defects | Electrode resistance (Ω) | Interface adhesiveness test |
| Example 1 | Electrode-1 | Simultaneous | P-1 | 10 | 10 | 650 | 10 | 1800 | 36 | 3000 | 280 | 160 | GA[3] | 0.5 | A | 8 | A |
| Example 2 | Electrode-2 | Simultaneous | P-2 | 10 | 10 | 650 | 10 | 1800 | 36 | 3000 | 280 | 160 | GA[3] | 0.5 | A | 8 | A |
| Example 3 | Electrode-3 | Simultaneous | P-3 | 10 | 10 | 650 | 10 | 1800 | 36 | 3000 | 280 | 160 | GA[3] | 0.5 | A | 8 | A |
| Example 4 | Electrode-4 | Simultaneous | P-4 | 5 | 10 | 650 | 10 | 1800 | 36 | 3000 | 280 | 160 | GA[3] | 0.5 | A | 12 | A |
| Example 5 | Electrode-5 | Simultaneous | P-5 | 0.5 | 10 | 650 | 10 | 1800 | 36 | 3000 | 280 | 160 | GA[3] | 0.5 | A | 36 | A |
| Example 6 | Electrode-6 | Simultaneous | P-3 | 10 | 10 | 650 | 10 | 1100 | 36 | 3000 | 280 | 160 | GA[3] | 0.5 | A | 8 | A |
| Example 7 | Electrode-7 | Simultaneous | P-3 | 10 | 10 | 650 | 60 | 1800 | 36 | 3000 | 280 | 160 | GA[3] | 0.5 | A | 30 | A |
| Example 8 | Electrode-8 | Simultaneous | P-3 | 10 | 10 | 650 | 10 | 1800 | 36 | 3000 | 130 | 160 | GA[3] | 0.5 | A | 8 | A |
| Example 9 | Electrode-9 | Simultaneous | P-3 | 10 | 10 | 650 | 10 | 1800 | 36 | 3000 | 280 | 110 | GA[3] | 0.5 | A | 8 | A |
| Example 10 | Electrode-10 | Portionwise[1] | P-3 | 10 | 10 | 650 | 10 | 1800 | 36 | 3000 | 280 | 160 | GA[3] | 0.5 | B | 8 | A |
| Example 11 | Electrode-11 | Simultaneous | P-10 | 5 | 10 | 650 | 10 | 1800 | 36 | 3000 | 280 | 160 | GA[3] | 0.5 | A | 40 | A |
| Comparative Example 1 | Electrode-12 | Simultaneous | PVA-1 | - | 10 | 650 | 10 | 1800 | 36 | 3000 | 280 | 160 | GA[3] | 0.5 | A | >150 | A |

[1]Application of the first layer and then application of the second layer without drying

[2]Thickness after drying

[3]Glutaraldehyde

Table 6

| | | Application conditions | | | | | | | | | | Heating conditions | Crosslinking conditions | | Evaluation of electrode performance | | | |
|---|---|---|---|---|---|---|---|---|---|---|---|---|---|---|---|---|---|---|
| | | Application method | Cation exchange layer | | | | | Porous electrode layer | | | | | | | | | | |
| | | | Type | Content of Ionic monomer units (mol%) | Concentration (wt%) | Viscosity (mPa·s) | Thickness[2] (μm) | Charcoal BET Adsorption area ($m^2/g$) | Concentration (wt%) | Viscosity (mPa·s) | Thickness[2] (μm) | Temperature (°C) | Type of a Cross-linking agent | Concentration (wt%) | Defects | Electrode Resistance (Ω) | Alkali resistance: membrane resistance increase percentage (%) | Interface adhesiveness test |
| Example 12 | Electrode-13 | Simultaneous | P-6 | 10 | 10 | 650 | 10 | 1800 | 36 | 3000 | 280 | 160 | GA[3] | 0.5 | A | 7 | 20 | A |
| Example 13 | Electrode-14 | Simultaneous | P-7 | 10 | 10 | 650 | 10 | 1800 | 36 | 3000 | 280 | 160 | GA[3] | 0.5 | A | 7 | 10 | A |
| Example14 | Electrode-15 | Simultaneous | P-8 | 5 | 10 | 650 | 10 | 1800 | 36 | 3000 | 280 | 160 | GA[3] | 0.5 | A | 11 | 10 | A |
| Example 15 | Electrode-16 | Simultaneous | P-9 | 0.5 | 10 | 650 | 10 | 1800 | 36 | 3000 | 280 | 160 | GA[3] | 0.5 | A | 36 | 10 | A |
| Example 16 | Electrode-17 | Simultaneous | P-7 | 10 | 10 | 650 | 10 | 1100 | 36 | 3000 | 280 | 160 | GA[3] | 0.5 | A | 7 | 10 | A |
| Example 17 | Electrode-18 | Simultaneous | P-7 | 10 | 10 | 650 | 70 | 1800 | 36 | 3000 | 280 | 160 | GA[3] | 0.5 | A | 30 | 10 | A |
| Example 18 | Electrode-19 | Simultaneous | P-7 | 10 | 10 | 650 | 10 | 1800 | 36 | 3000 | 130 | 160 | GA[3] | 0.5 | A | 7 | 10 | A |
| Example 19 | Electrode-20 | Simultaneous | P-7 | 10 | 10 | 650 | 10 | 1800 | 36 | 3000 | 280 | 110 | GA[3] | 0.5 | A | 7 | 10 | A |
| Example 20 | Electrode-21 | Portionwise[1] | P-7 | 10 | 10 | 650 | 10 | 1800 | 36 | 3000 | 280 | 160 | GA[3] | 0.5 | B | 7 | 10 | A |
| Example 21 | Electrode-22 | Simultaneous | P-11 | 5 | 10 | 650 | 10 | 1800 | 36 | 3000 | 280 | 160 | GA[3] | 0.5 | A | 40 | 20 | A |
| Comparative Example 2 | Electrode-23 | Simultaneous | P-12[4] | - | 18 | 960 | 10 | 1800 | 36 | 3000 | 280 | 130 | - | - | A | 15 | 230 | A |

[1]Application of the first layer and then application of the second layer without drying

[2]Thickness after drying

[3]Glutaraldehyde

[4]PVA117/SSA (sulfosuccinic acid)

Example 22

A capacitor shown in FIG. 1 was assembled using electrode-1 as an electrode 2 having an anion-exchange layer 4 and electrode-13 as an electrode 3 having a cation-exchange layer 7. Here, a separator (Nippon Tokushu Fablic Inc. , "LS60", thickness: 90 μm) was interposed between the electrode-1 and the electrode-13, to form a flow path 10. Ten of these capacitor units were stacked to provide a flow-through capacitor. Here, the capacitor units were stacked such that the current collector layers in electrodes in which a fixed charge in the ion exchange layer had the same sign mutually face. A usable dimension of the electrode was 6 cm x 6 cm. Using the flow-through capacitor thus obtained, a desalination apparatus having a similar configuration to the desalination apparatus 15 shown in FIG. 3 was produced. Electrode-1 was connected to a cathode in a constant-voltage (1.5 V) DC power supply and electrode -13 was connected to an anode, and a voltage was applied between the electrodes. To the desalination apparatus was fed an aqueous solution with an ion concentration of 500 ppm which was prepared by dissolving NaCl in deionized water. After adsorption of ions in the aqueous solution for 180 sec, the liquid was collected.

An ion concentration of the liquid collected was measured to determine the amount of ions adsorbed in the electrode. Furthermore, a current efficiency was calculated in accordance with the following equation.

$$\text{Efficiency (\%)} = (\text{Amount of adsorbed salt (mol)} \times 100) / \{\text{Average current in an absorption step (A)} \times \text{Adsorption time (sec)} / \text{Faraday constant (C/mol)}\}$$

Here, a current efficiency was 95 %.

The electrode used for ion adsorption was washed as described below. An aqueous solution of NaCl (ion concentration: 500 ppm) was fed to the desalination apparatus. An anode and a cathode of a constant voltage (1.5 V) DC power supply were connected to electrode-1 and electrode-13 respectively, and a voltage was applied between the electrodes. After ion desorption for 60 sec, an aqueous solution containing the ionic substance desorbed was discharged. After thus washing the electrodes, the desalination apparatus was again used for ion adsorption. Even after 10 cycles of ion adsorption and desorption, significant change in a current efficiency was not observed.

Examples 23 to 32

A desalination apparatus was produced as described for Example 22, substituting a combination shown in Table 7 for the electrode having an anion-exchange layer and the electrode having a cation-exchange layer, and a current efficiency was measured. The measurement results are shown in Table 7. As described in Example 22, ion adsorption and desorption was repeated 10 cycles. In all examples, significant difference was not observed in a current efficiency between the first and the tenth cycles.

Comparative Example 3

A desalination apparatus was produced as described for Example 22, substituting a combination shown in Table 7 for the electrode having an anion-exchange layer and the electrode having a cation-exchange layer, and a current efficiency was measured. The measurement results are shown in Table 7.

Table 7

| | Electrode having an anion exchange layer | Electrode having a cation exchange layer | Current efficiency (%) |
|---|---|---|---|
| Example 22 | Electrode-1 | Electrode-13 | 95 |
| Example 23 | Electrode-2 | Electrode-14 | 95 |
| Example 24 | Electrode-3 | Electrode-14 | 95 |
| Example 25 | Electrode-4 | Electrode-15 | 88 |
| Example 26 | Electrode-5 | Electrode-16 | 85 |
| Example 27 | Electrode-6 | Electrode-17 | 88 |

(continued)

| | Electrode having an anion exchange layer | Electrode having a cation exchange layer | Current efficiency (%) |
|---|---|---|---|
| Example 28 | Electrode-7 | Electrode-18 | 90 |
| Example 29 | Electrode-8 | Electrode-19 | 90 |
| Example 30 | Electrode-9 | Electrode-20 | 86 |
| Example 31 | Electrode-10 | Electrode-21 | 93 |
| Example 32 | Electrode-11 | Electrode-22 | 80 |
| Comparative Example 3 | Electrode-12 | Electrode-12 | <10 |

From the results in Table 5, it can be seen that an electrode integrated with an anion-exchange layer having an an ion-exchange layer containing a vinyl alcohol copolymer (P1) copolymerized with a monomer having a cationic group has little defects due to foaming in the anion-exchange layer, a lower electrode resistance and excellent interface adhesiveness between the ion exchange layer and the porous electrode layer (Examples 1 to 11). In particular, it can be seen that when a cationic block copolymer (P1') in which a content of the units of a monomer having a cationic group is 5 mol% or more, an electrode resistance is low (Examples 1 to 4, Examples 6 to 10). Furthermore, it can be seen that when a slurry containing a carbon material and an aqueous solution of a cationic block copolymer (P1') are simultaneously applied to form a porous electrode layer and an ion exchange layer, defects due to foaming in an ion exchange layer are further reduced (Examples 1 to 4, 6 to 9). Furthermore, it can be seen that when a thickness of an anion-exchange layer is 50 $\mu$m or less, a resistance of an electrode is further reduced (Examples 1 to 4, Example 6, Examples 8 to 9). In contrast, an electrode integrated with an anion-exchange layer produced by applying an aqueous solution of a polyvinyl alcohol with no ionic groups (PVA-1) and then heating to initiate crosslinking has a high electric resistance (Comparative Example 1).

From the results in Table 6, it can be seen that an electrode integrated with a cation-exchange layer having a cation-exchange layer containing a vinyl alcohol copolymer (P2) copolymerized with a monomer having an anionic group has little defects due to foaming in the cation-exchange layer, a lower electrode resistance, excellent alkali-resistance and excellent interface adhesiveness between the ion exchange layer and the porous electrode layer (Examples 12 to 21). In particular, it can be seen that an electrode employing an anionic block copolymer (P2') with a modified anion-group amount of 5 mol% or more has a further lower resistance (Examples 12 to 14, 16 to 20). Furthermore, it can be seen that by forming an ion exchange layer by the simultaneous application method, defects due to foaming are further reduced (Examples 12 to 14, 16 to 19). Furthermore, it can be seen that when a thickness of the cation-exchange layer is 50 $\mu$m or less, a resistance of the electrode is further reduced (Examples 12 to 14, 16, 18, 19). In contrast, an electrode integrated with a cation-exchange layer produced by applying a mixed solution of a polyvinyl alcohol and sulfosuccinic acid and then heating to introduce an anion group and crosslinking is less alkali-resistant because the crosslink structure is formed via ester bonds (Comparative Example 2).

From the results in Table 7, it can be seen that a flow-through capacitor employing an electrode integrated with a cation-exchange layer and an electrode integrated with an anion-exchange layer having an ion exchange layer containing a vinyl alcohol copolymer (P) copolymerized with a monomer having an ionic group has a high current efficiency (Examples 22 to 32). In particular, it can be seen that a current efficiency is high in a flow-through capacitor employing an electrode integrated with a cation-exchange layer and an electrode integrated with an anion-exchange layer containing a block copolymer (P') containing a vinyl alcohol polymer block and an ionic-group-containing polymer block as components and having an ionic monomer unit content of 5 mol% or more (Examples 22 to 25, 27 to 31). Furthermore, it can be seen that a current efficiency is particularly higher with the use of an integrated type electrode in which a BET adsorption area of activated carbon is 1500 $m^2/g$ or more, a thickness of an ion exchange layer is less than 50 $\mu$m and a thickness of a porous electrode layer containing a carbon material is 150 $\mu$m or more, and which is produced by simultaneous application of a slurry containing a carbon material and an aqueous solution of an ionic copolymer with a heating temperature of 120 °C or higher (Examples 22 to 24). In contrast, a current efficiency is lower for a flow-through capacitor employing an electrode integrated with a cation-exchange layer and an electrode integrated with an anion-exchange layer having an ion exchange layer with no ionic groups (Comparative Example 3).

EXPLANATION OF REFERENCES

1: Flow-through capacitor
2, 3, 23: Electrode
4: Anion-exchange layer
5, 8, 25: Porous electrode layer
6, 9: Current collector layer
7: Cation-exchange layer
10: Flow path
11, 14: Anion
12, 13: Cation
15: Desalination apparatus
16: Container
17: Direct-current power supply
18: Inlet
19: Outlet
20: Capacitor unit
21: Through-hole
22: Titanium electrode
24: Separator
26: Cationic block copolymer (P1') layer

## Claims

**1.** An electrode comprising a current collector layer, a porous electrode layer and an ion exchange layer which are arranged in this order,
wherein the ion exchange layer contains a vinyl alcohol copolymer (P) copolymerized with 0.1 to 50 mol% of a monomer having an ionic group, and
the porous electrode layer contains a carbon material.

**2.** The electrode as claimed in Claim 1, wherein the vinyl alcohol copolymer (P) is a block copolymer (P') containing a vinyl alcohol polymer block (A) and an ionic-group-containing polymer block (B) as components.

**3.** The electrode as claimed in Claim 1 or 2, wherein a thickness of the ion exchange layer is 1 to 100 μm and a thickness of the porous electrode layer is 50 to 1000 μm.

**4.** An electrode for a flow-through capacitor consisting of the electrode as claimed in any of Claims 1 to 3.

**5.** A method for producing the electrode as claimed in any of Claims 1 to 3, comprising applying a slurry containing the carbon material and a solution containing the vinyl alcohol copolymer (P) to the surface of the current collector layer, and then drying the coated film to form the porous electrode layer and the ion exchange layer.

**6.** The method for producing the electrode as claimed in Claim 5, wherein the slurry containing the carbon material and the solution containing the vinyl alcohol copolymer (P) are concurrently applied to the surface of the current collector layer.

**7.** The method for producing the electrode as claimed in Claim 5, wherein the slurry containing the carbon material is applied to the surface of the current collector layer and then the solution of the vinyl alcohol copolymer (P) is applied to the surface of the slurry.

**8.** The method for producing the electrode as claimed in any of Claims 5 to 7, wherein the coated film is dried and then further heated and/or crosslinked.

**9.** A flow-through capacitor, wherein
a flow path is formed between the electrodes as claimed in Claim 4;
the ion exchange layer in one electrode is an anion-exchange layer containing a vinyl alcohol copolymer (P1) copolymerized with 0.1 to 50 mol% of a monomer having a cationic group;
the ion exchange layer in the other electrode is a cation-exchange layer containing a vinyl alcohol copolymer (P2) copolymerized with 0.1 to 50 mol% of a monomer having an anionic group; and

the anion-exchange layer and the cation-exchange layer faces each other via the flow path.

**10.** A desalination apparatus, comprising the flow-through capacitor as claimed in Claim 9, a container containing the capacitor and a direct-current power supply,
wherein the direct-current power supply is connected to each electrode such that a cathode and an anode are exchangeable; and
wherein the container has an inlet for a liquid containing an ionic substance to be desalinized with flow-through capacitor and an outlet for a desalinized liquid.

**11.** A process for desalinizing a liquid containing an ionic substance using the desalination apparatus as claimed in Claim 10, comprising
a first step comprising
feeding a liquid containing an ionic substance to the flow path between the electrodes,
applying a voltage to each of the electrode having the anion-exchange layer as a cathode and the electrode having the cation-exchange layer as an anode by the direct-current power supply to adsorb ions in the liquid onto the porous electrode layer,
and then discharging the liquid for collection; and
a second step comprising
feeding a liquid to the flow path,
applying a voltage to each of the electrode having the anion-exchange layer as an anode and the electrode having the cation-exchange layer as a cathode by the direct-current power supply to desorb ions adsorbed onto the porous electrode layer in the first step,
and then discharging the liquid containing desorbed ions.

[Fig. 1]

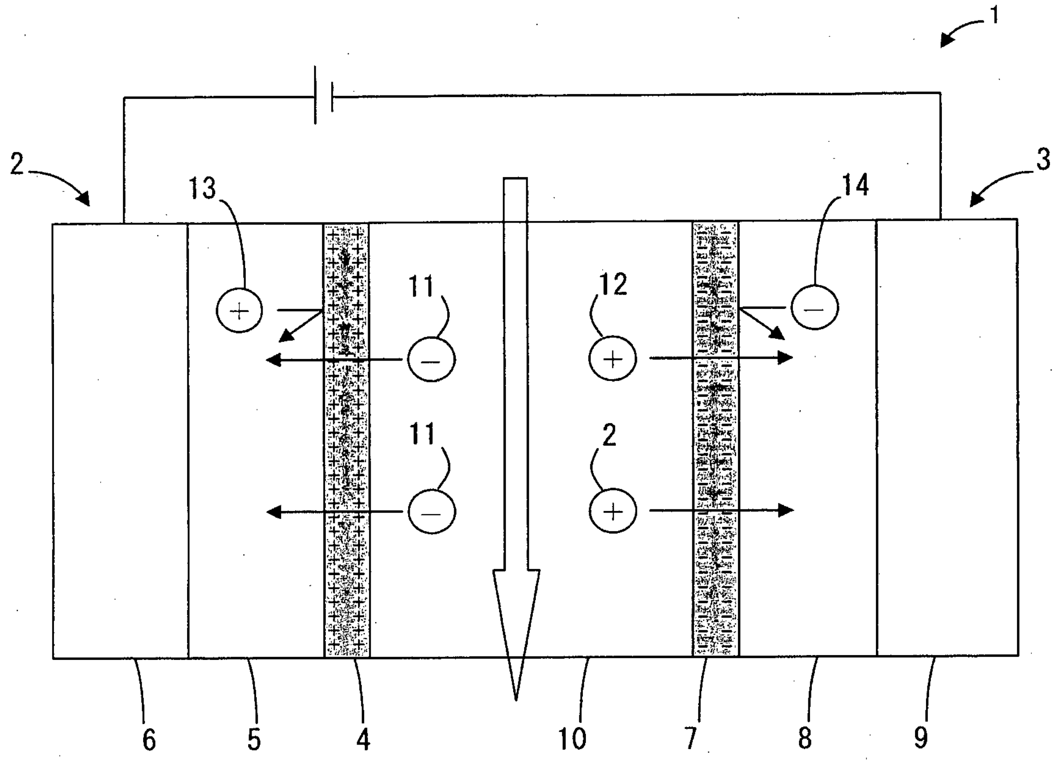


[Fig. 2]

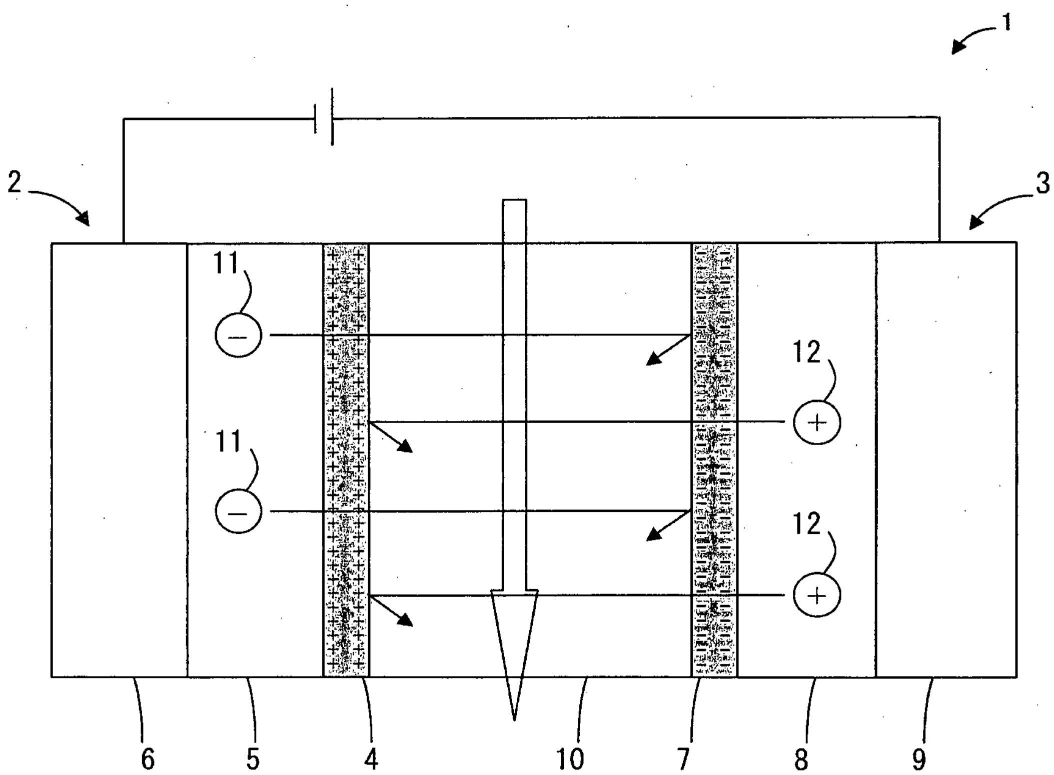

[Fig. 3]

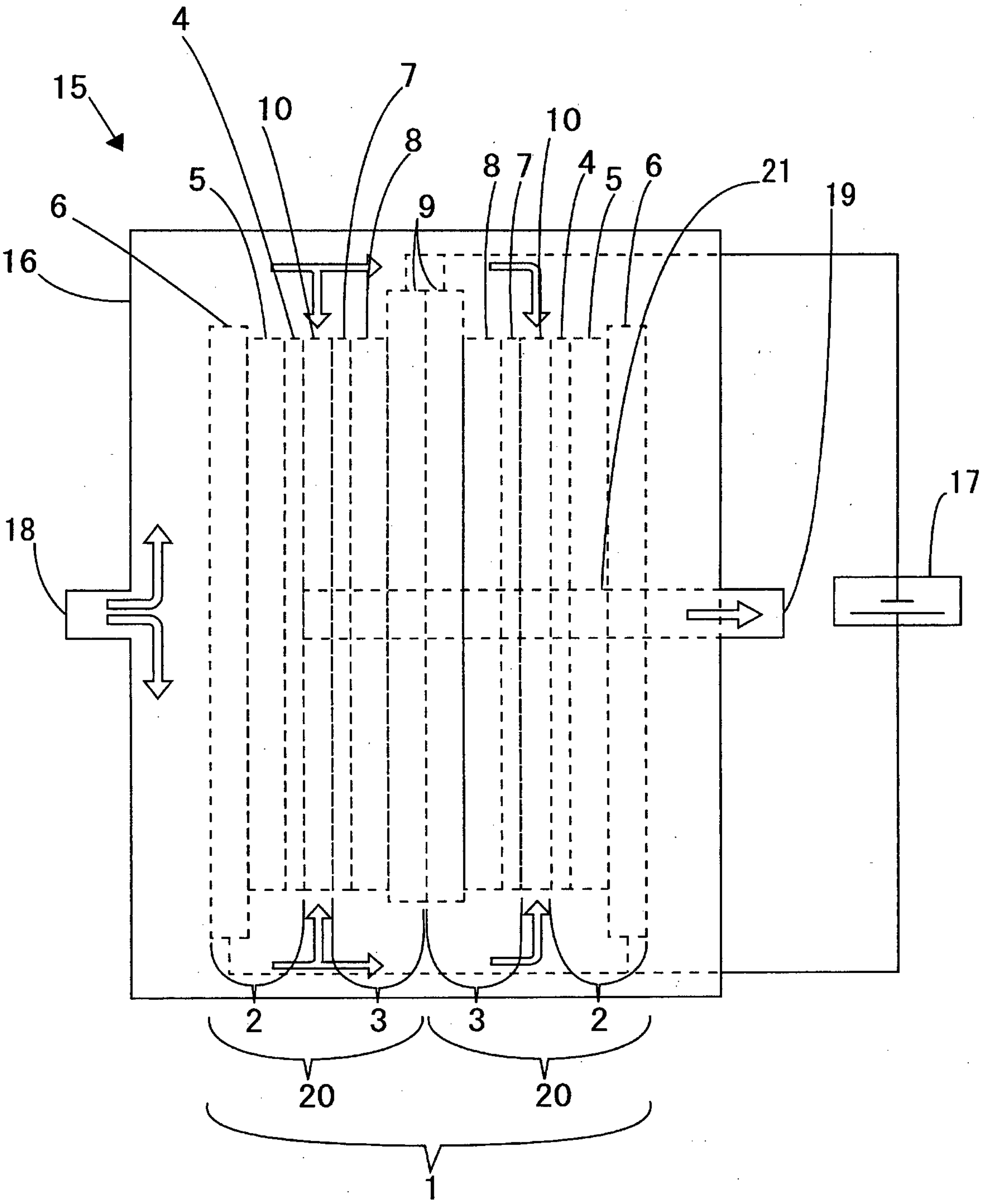

[Fig. 4]

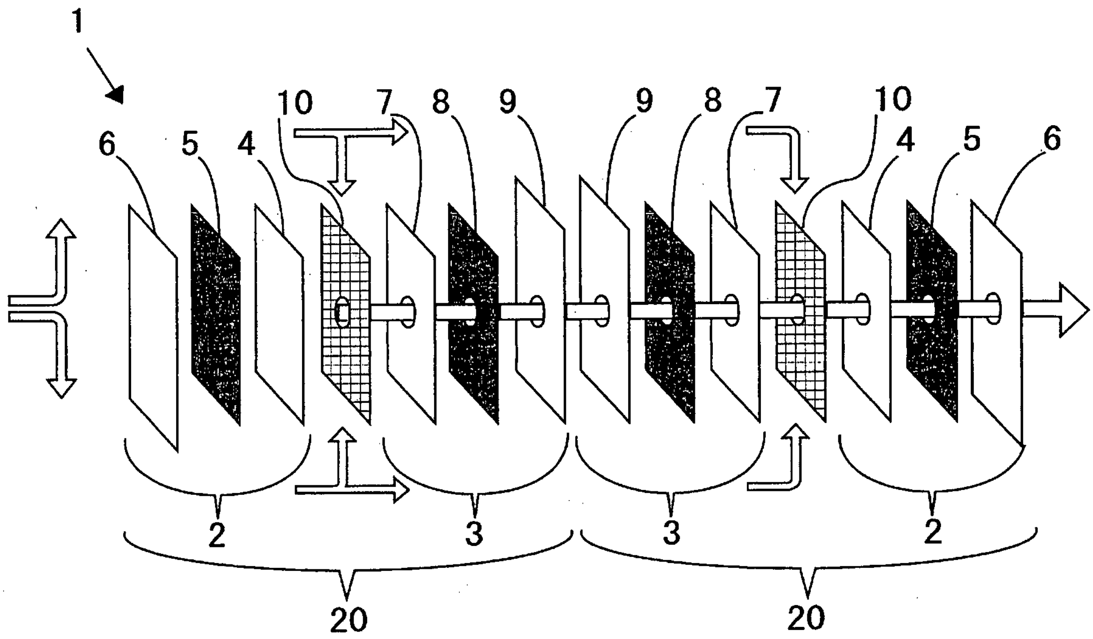


[Fig. 5]

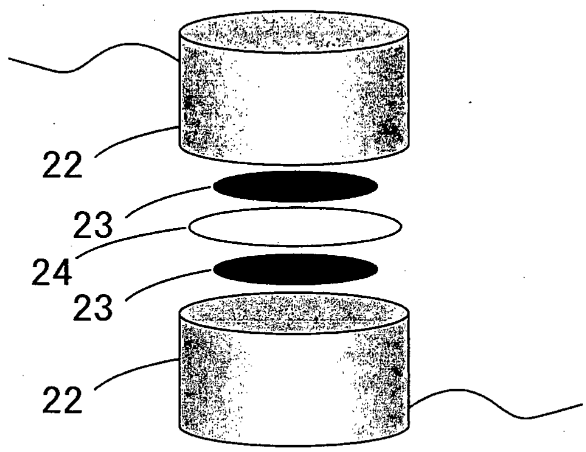

[Fig. 6]

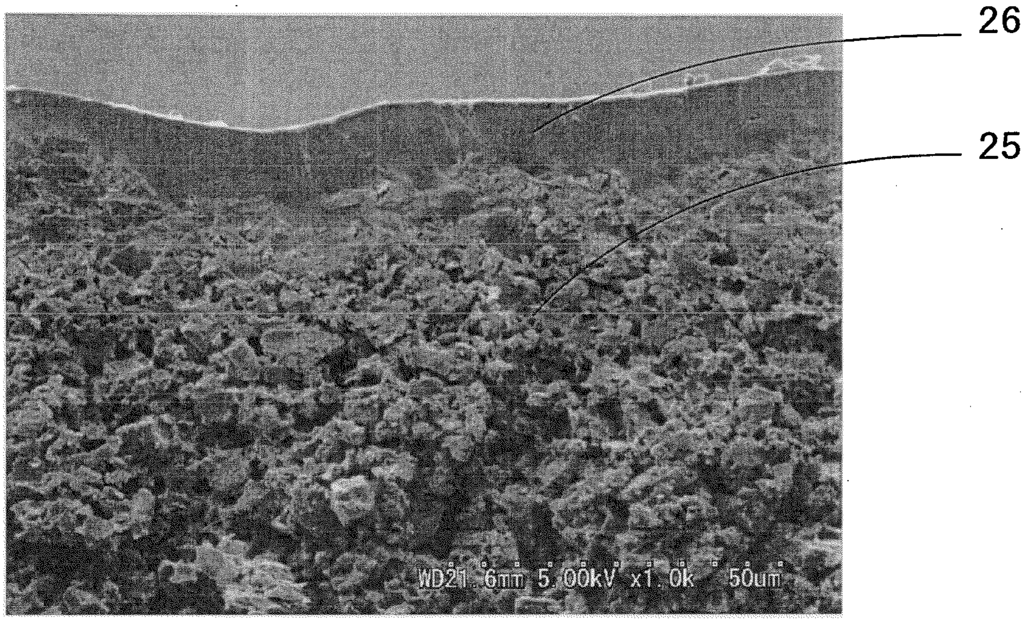

## INTERNATIONAL SEARCH REPORT

International application No. PCT/JP2013/073983

A. CLASSIFICATION OF SUBJECT MATTER
*C02F1/48*(2006.01)i

According to International Patent Classification (IPC) or to both national classification and IPC

B. FIELDS SEARCHED

Minimum documentation searched (classification system followed by classification symbols)
C02F1/48

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
JSTPlus/JMEDPlus/JST7580(JDreamIII)

C. DOCUMENTS CONSIDERED TO BE RELEVANT

| Category* | Citation of document, with indication, where appropriate, of the relevant passages | Relevant to claim No. |
|---|---|---|
| Y | Yu-Jin Kim,Jae-Hwan Choi, Improvement of desalination efficiency in capacitive deionization using a carbon electrode coated with an ion-exchange polymer, WATER RESEARCH, 2010.02, Vol.44, Page.990-996 | 1-8 |
| Y | WO 2008/090774 A1 (Kuraray Co., Ltd.), 31 July 2008 (31.07.2008), entire text; all drawings & US 2010/0098997 A1 & EP 2110875 A1 & CN 101589496 A & KR 10-2009-0112674 A | 1-8 |
| Y | JP 2009-158128 A (Tokuyama Corp.), 16 July 2009 (16.07.2009), entire text; all drawings (Family: none) | 1-8 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 November, 2013 (01.11.13) | 12 November, 2013 (12.11.13) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2013/073983

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2011-167643 A (Kuraray Co., Ltd.), 01 September 2011 (01.09.2011), entire text; all drawings (Family: none) | 1-8 |
| P,X | JP 2013-149462 A (Kuraray Co., Ltd.), 01 August 2013 (01.08.2013), entire text; all drawings (Family: none) | 1-11 |
| P,X | WO 2012/133034 A1 (Tokyo University of Science), 04 October 2012 (04.10.2012), entire text; all drawings (Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5192432 A
- JP 5258992 A
- US 6709560 B
- JP 2010513018 A
- JP 59187003 A
- JP 59189113 A

### Non-patent literature cited in the description

- *J. Membr. Sci.,* 2010, vol. 355, 85